# EUROPEAN PATENT SPECIFICATION

(11) **EP 1 384 873 B1**
(45) Date of publication and mention of the grant of the patent: **03.11.2010**
(21) Application number: 02720532.7
(22) Date of filing: 19.04.2002
(51) Int. Cl.: F02D 33/00, F02D 9/10

(54) **ENGINE INTAKE CONTROL DEVICE**
MOTOREINLASSSTEUERVORRICHTUNG
DISPOSITIF DE COMMANDE D'ADMISSION DE MOTEUR

(30) Priority: 27.04.2001 JP 2001132575; 31.08.2001 JP 2001264606; 04.03.2002 JP 2002057791
(43) Date of publication of application: 28.01.2004
(73) Proprietor: Keihin Corporation, Shinjuku-ku, Tokyo (JP); HONDA GIKEN KOGYO KABUSHIKI KAISHA, Minato-ku Tokyo 107-8556 (JP)
(72) Inventor: AKIYAMA, Hiroshige, c/o Kakuda Dev.Ctr.Keihin Corp., Kakuda-shi, Miyagi 981-1505 (JP); SHIMOKAWA, Junichi, c/o Kakuda Dev.Ctr.Keihin Corp., Kakuda-shi, Miyagi 981-1505 (JP); SUZUKI, Osamu, c/o Kakuda Dev.Ctr.Keihin Corp., Kakuda-shi, Miyagi 981-1505 (JP); UEDA, Minoru, c/o Kabushiki Kaisha Honda Gijutsu Kenkyusho, Wako-shi, Saitama 351-0193 (JP); HAYASHI, Akira, c/o Kabushiki Kaisha Honda Gijutsu Kenkyusho, Wako-shi, Saitama 351-0193 (JP); AKAMATSU, Shunji, c/o Kabushiki Kaisha Honda Gijutsu Kenkyusho, Wako-shi, Saitama 351-0193 (JP); SHIMADA, Nobuhiro, c/o Kabushiki Kaisha Honda Gijutsu Kenkyusho, Wako-shi, Saitama 351-0193 (JP); SAITO, Norio, c/o Kabushiki Kaisha Honda Gijutsu Kenkyusho, Wako-shi, Saitama 351-0193 (JP)
(74) Representative: Prechtel, Jörg
(86) International application number: PCT/JP2002/003946
(87) International publication number: WO 2002/097253

(56) References cited:
- EP-A- 0 676 543
- JP-A- 10 299 624
- JP-A- 11 280 526
- JP-U- 60 157 947
- JP-U- 63 136 236
- US-A- 5 711 271

## Description

### FIELD OF THE INVENTION

The present invention relates to an intake-air amount control system for an engine, in which a bypass is connected to an intake passage defined in a throttle body and provided with a throttle valve, and extends around the throttle valve, and an actuator is connected to a bypass valve for opening and closing the bypass to open and close the bypass valve.

### BACKGROUND ART

Such an intake-air amount control system for an engine is already known, as disclosed, for example, in Japanese Utility Model Publication No.6-45654, as well as in JP-10299624.

In such conventional intake-air amount control system for the engine, the entire bypass is defined in the throttle body, and the bypass valve and the actuator are mounted to the throttle body. Therefore, the conventional system is accompanied with the following drawbacks: a complicated processing or working is required for the throttle body and moreover, all of parts must be assembled to the throttle body itself, resulting in a poor assemblability.

### DISCLOSURE OF THE INVENTION

The present invention has been accomplished with such circumstances in view, and it is an object of the present invention to provide an intake-air amount control system of the above-described type for an engine, wherein the workability and assemblability are improved and moreover, the system can be constructed compactly.

To achieve the above object, according to a first aspect and feature of the present invention, there is provided an intake-air amount control system for an engine, in which a bypass is connected to an intake passage defined in a throttle body and provided with a throttle valve, and extends around the throttle valve, and an actuator is connected to a bypass valve for opening and closing the bypass to open and close the bypass valve, **characterized in that** a joint surface of a control block is coupled to a mounting surface formed on the throttle body in parallel to an axis of the intake passage; the bypass is comprised of a bypass inlet made in the throttle body and permitting the communication between a portion of the intake passage upstream from the throttle valve and the mounting surface, a bypass outlet made in the throttle body and permitting the communication between a portion of the intake passage downstream from the throttle valve and the mounting surface, a bypass upstream groove defined in at least one of the mounting surface and the joint surface and leading to the bypass inlet, a bypass downstream groove defined in at least one of the mounting surface and the joint surface and leading to the bypass outlet, a valve bore inlet provided in the control block so as to be connected to a downstream end of the bypass upstream groove, a valve bore outlet provided in the control block so as to be connected to an upstream end of the bypass downstream groove, and a valve bore provided in the control block to permit the communication between the valve bore inlet and the valve bore outlet; and the bypass valve for putting the valve bore inlet and the valve bore outlet into and out of communication with each other within the valve bore and the actuator for opening and closing the bypass valve are disposed in the control block in parallel to the intake passage.

The actuator corresponds to a step motor 39, 228 in the first and second embodiments of the present invention which will be described hereinafter.

With the first feature, a control block assembly comprising the control block, the bypass valve, the actuator and the like can be fabricated in parallel with the throttle body, which can contribute to an enhancement in productivity.

Especially, the bypass upstream groove and the bypass downstream groove constituting principal portions of the bypass can be formed in the mounting surface of the throttle body or in the joint surface of the control block by stamping and hence, the fabrication is extremely easy. Moreover, the bypass valve and the actuator are disposed in parallel to the joint surface of the control block and hence, the bypass upstream groove as well as the bypass downstream groove and the bypass valve as well as the actuator can be provided in the relatively thin control block in such a manner that they are disposed in proximity to each other. Therefore, the overhanging of the control block from the throttle body can be reduced, leading to the compactness of the entire intake-air amount control system.

Further, if the control block is removed from the throttle body, the maintenance of the bypass, the bypass valve, the actuator and the like can be carried out easily.

Yet further, it is possible to easily provide an intake-air amount control system for an engine having a different specification, while using the same throttle body, by changing the specifications of the bypass valve and the actuator in the control block, leading to an enhancement in mass productivity of the throttle body.

According to a second aspect and feature of the present invention, in addition to the first feature, the intake passage in the throttle body is disposed substantially horizontally; the cylindrical valve bore disposed substantially in parallel to the intake passage and both of the valve bore inlet and the valve bore outlet opening into a lower surface of the valve bore and leading respectively to downstream and upstream portions of the bypass are provided in an intermediate portion of the bypass; and the bypass valve of a piston type for putting the valve bore inlet and the valve bore outlet into and out of communication with each other is slidably received in the valve bore, so that opposite end faces of the bypass valve are in communication with each other.

With the second feature, even if any pressure is transmitted to the valve bore, no difference in pressure is generated between the axially opposite end faces of the piston-type bypass valve. Therefore, the bypass valve can be operated lightly even by a relatively small output from the actuator to control the amount of intake air in the bypass, thereby providing a decrease in output from the actuator and in its turn, a reduction in size of the actuator, while enhancing the responsiveness of the bypass valve.

Moreover, the intake-air amount control system can be constructed compactly by disposing the valve bore and thus the bypass valve in parallel to the intake passage.

Further, by providing the valve bore inlet and the valve bore outlet of the bypass to open into the lower surface of the valve bore, foreign matters such as dust are difficult to enter into the valve bore through the valve bore inlet and the valve bore outlet and hence, the reliability for the operation of the bypass valve can be enhanced.

According to a third aspect and feature of the present invention, in addition to the first or second feature, the valve bore inlet normally opens into the valve bore, and the valve bore outlet is opened and closed by the bypass valve.

With the third feature, when the operation of the engine is in stoppage, in usual, the bypass valve brings the valve bore outlet into a fully closed state and hence, even if a fuel gas generated at a downstream portion of the intake passage enters into a downstream portion of the bypass, the entering of the fuel gas into the valve bore is inhibited by the bypass valve. Therefore, the actuator for driving the bypass valve can be prevented from being exposed to the fuel gas, whereby the durability of the actuator can be ensured.

According to a fourth aspect and feature of the present invention, in addition to any of the first to third features, the bypass valve and the actuator arranged coaxially with each other above a substantially horizontally disposed valve shaft of the throttle valve are disposed in such a manner that the former is turned toward an upstream portion of the intake passage and the latter is turned toward a downstream portion of the intake passage, and the length of a portion of the bypass downstream from the valve bore is set at a value larger than that of a portion of the bypass upstream from the valve bore.

With the fourth feature, the actuator and the bypass valve can be disposed with a good balance above the throttle valve shaft, which can contribute to the compactness of the intake-air control system.

Moreover, since the length of the portion of the bypass downstream from the valve bore is set at a sufficiently large value, a fuel gas generated in the downstream portion of the intake passage is difficult to pass through the sufficiently long downstream portion of the bypass. Therefore, it is possible to prevent the entering of the fuel gas into the valve bore to protect the actuator.

According to a fifth aspect and feature of the present invention, in addition to any of the first to fourth features, the throttle body is mounted, with an upstream end of the intake passage turned rearwards, to an engine provided, with a cylinder block inclined forwards in a power unit vertically swingably supported on a body frame of a two-wheeled motor vehicle to support a rear wheel at its rear end.

With the fifth feature, the intake-air amount control system can be mounted to the engine without specially increasing the entire height thereof.

### BRIEF DESCRIPTION OF THE DRAWINGS

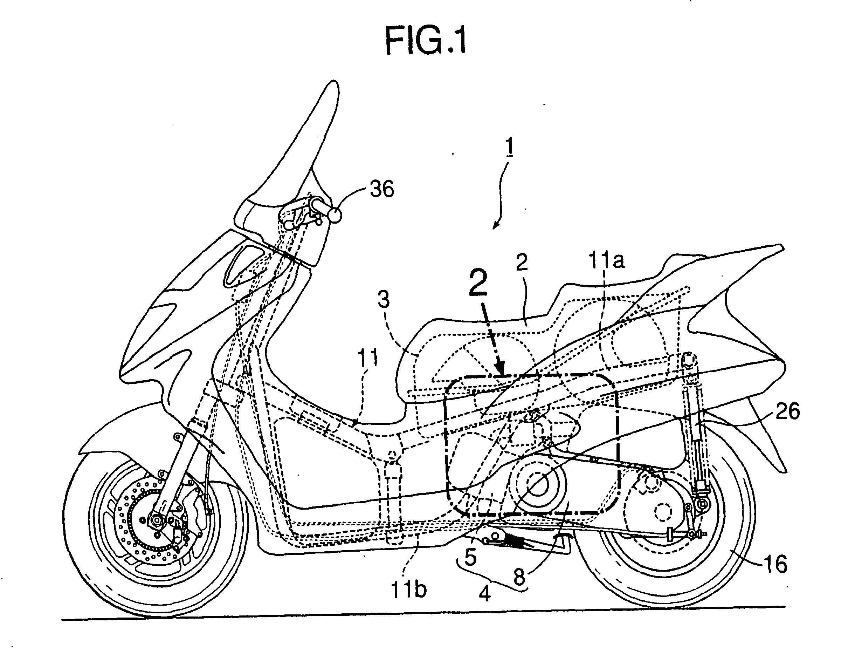

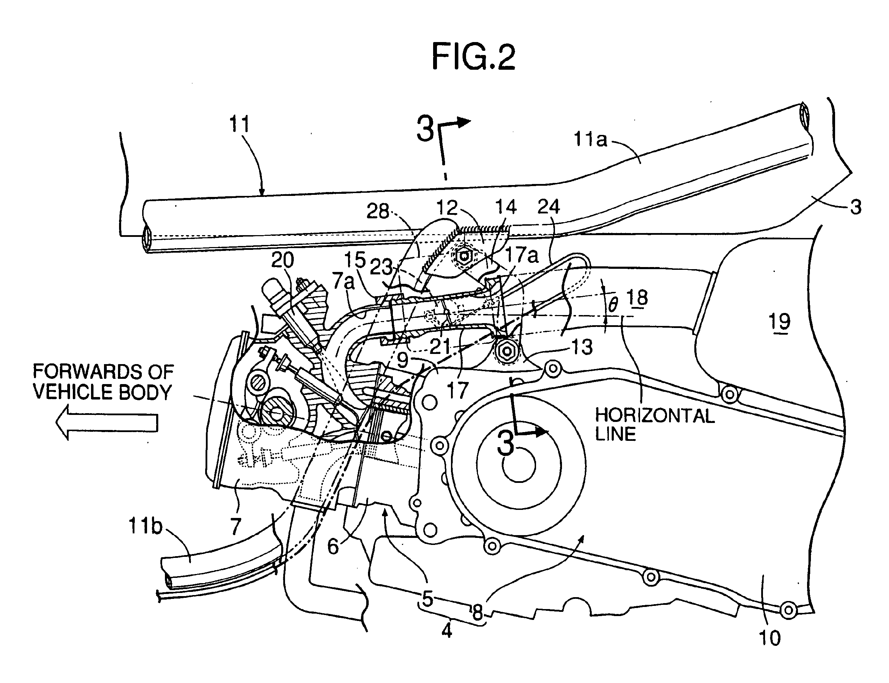

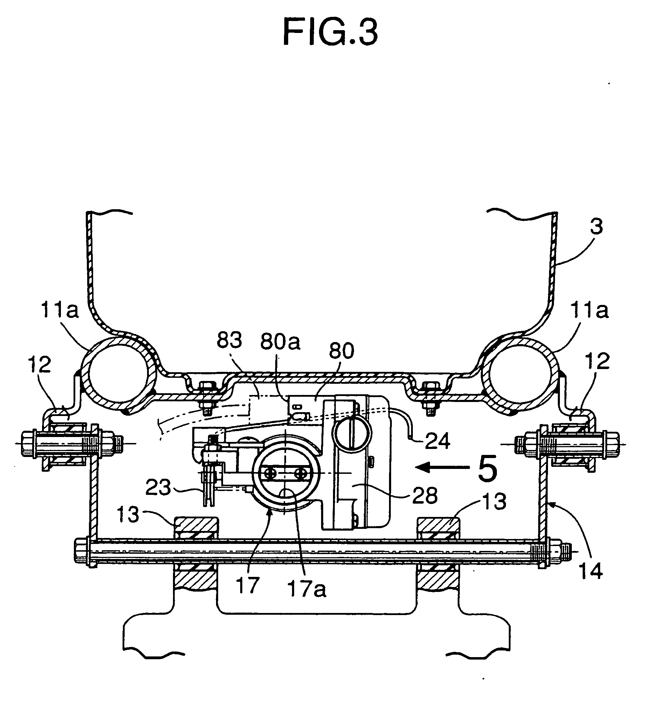

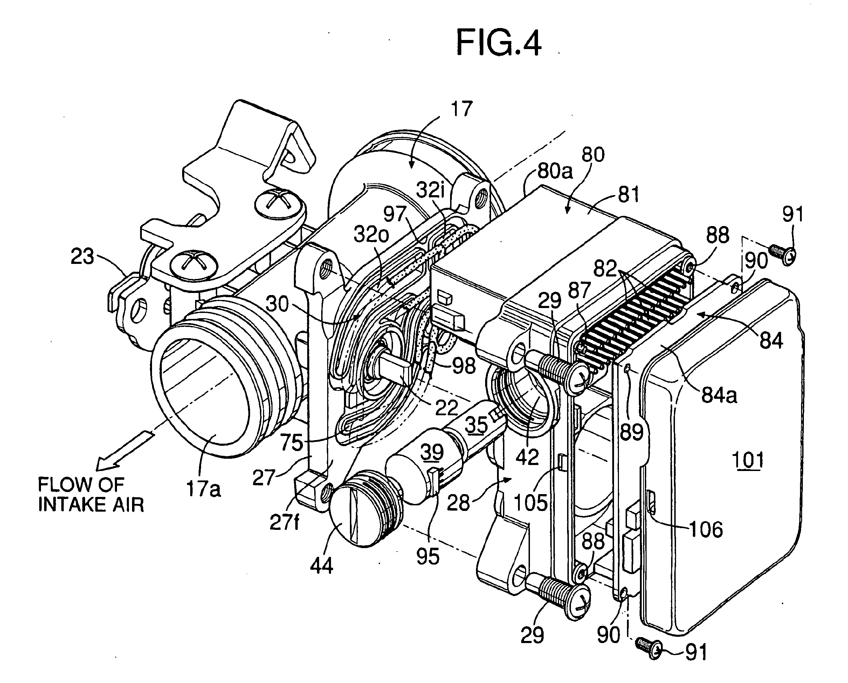

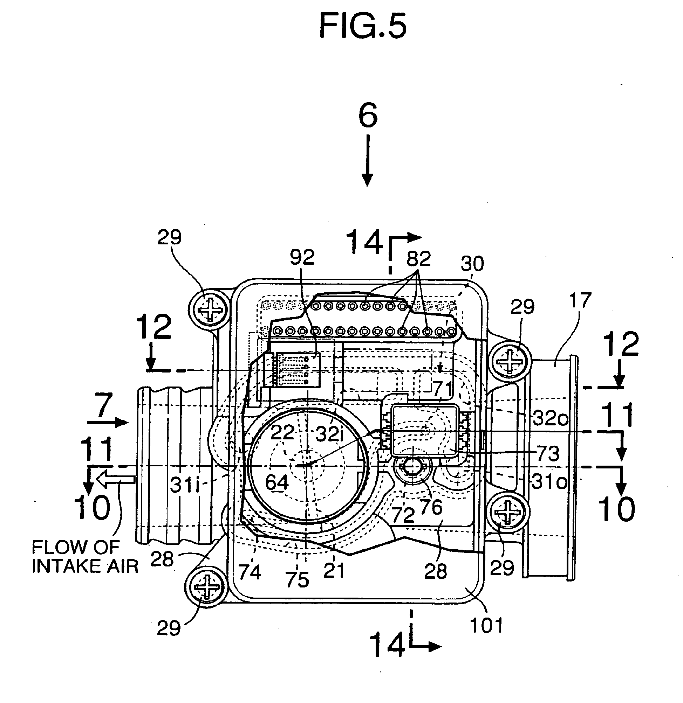

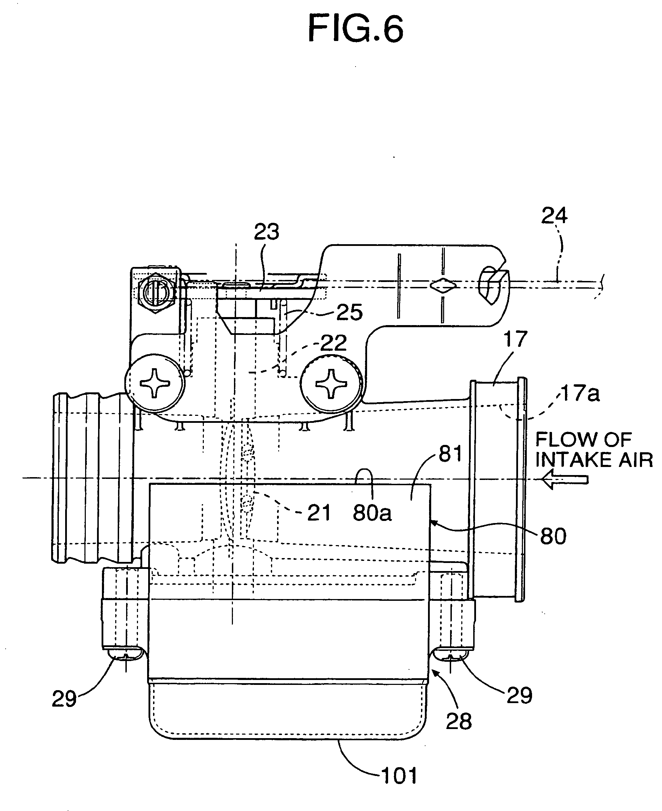

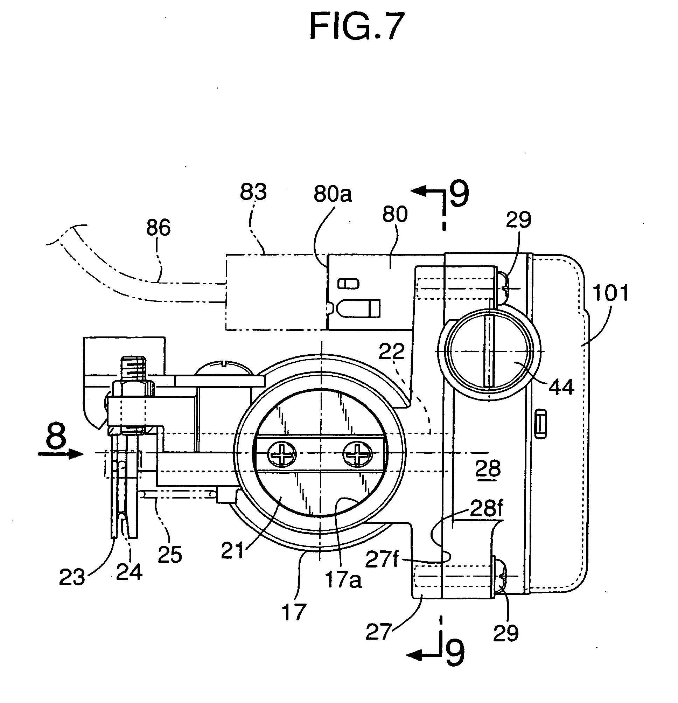

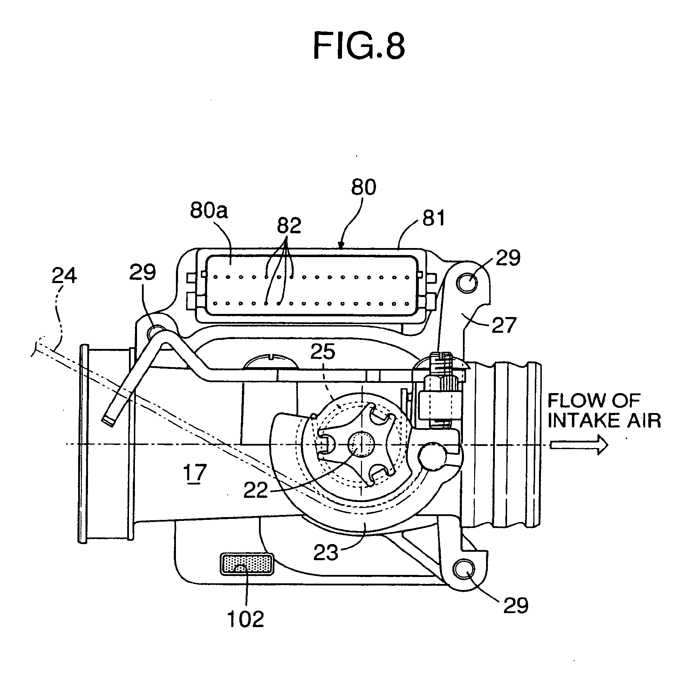

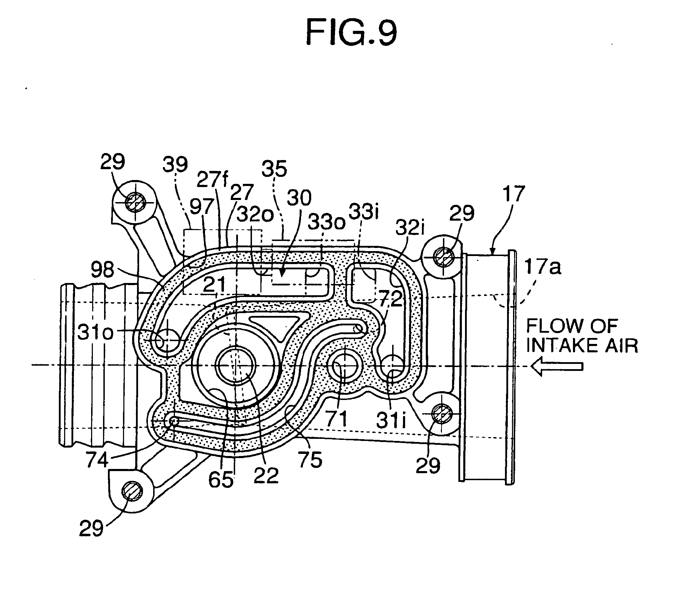

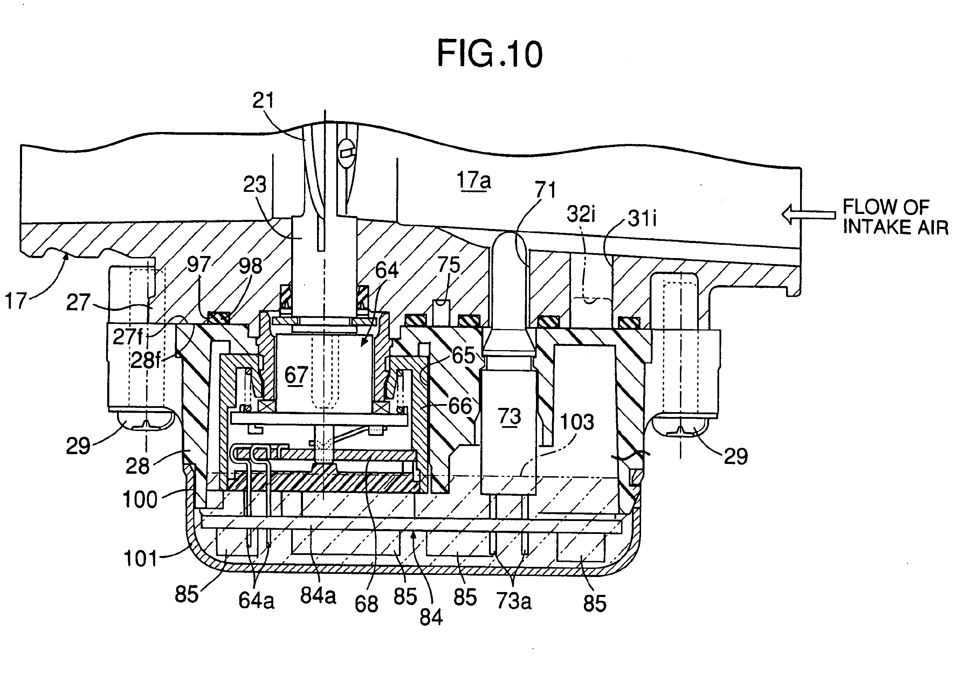

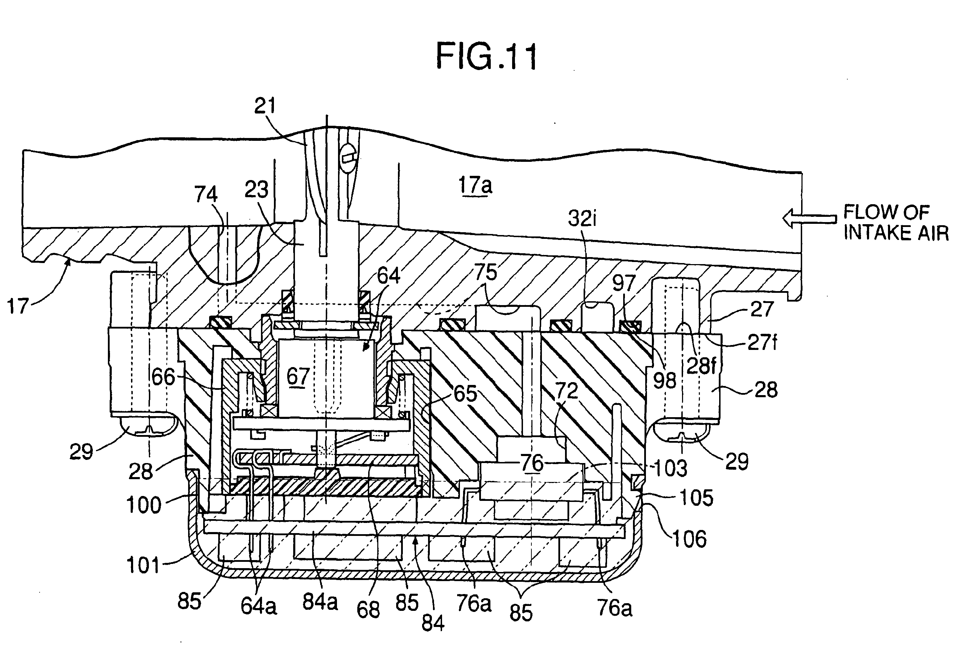

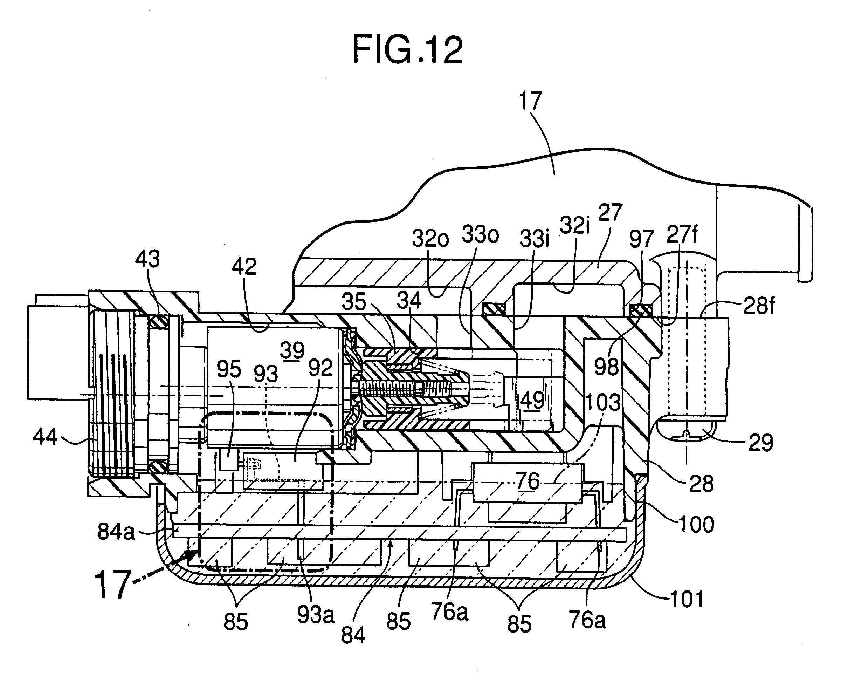

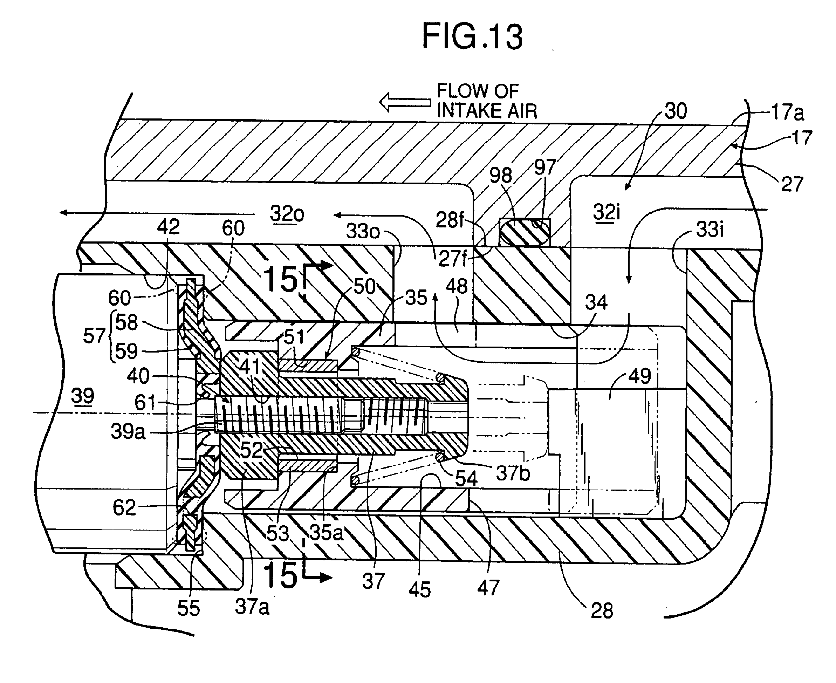

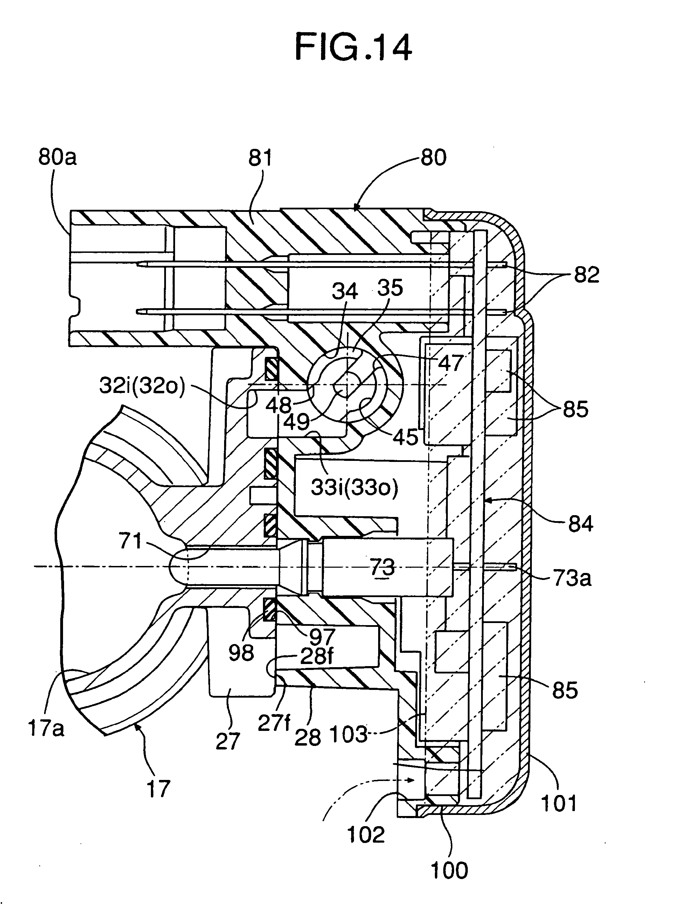

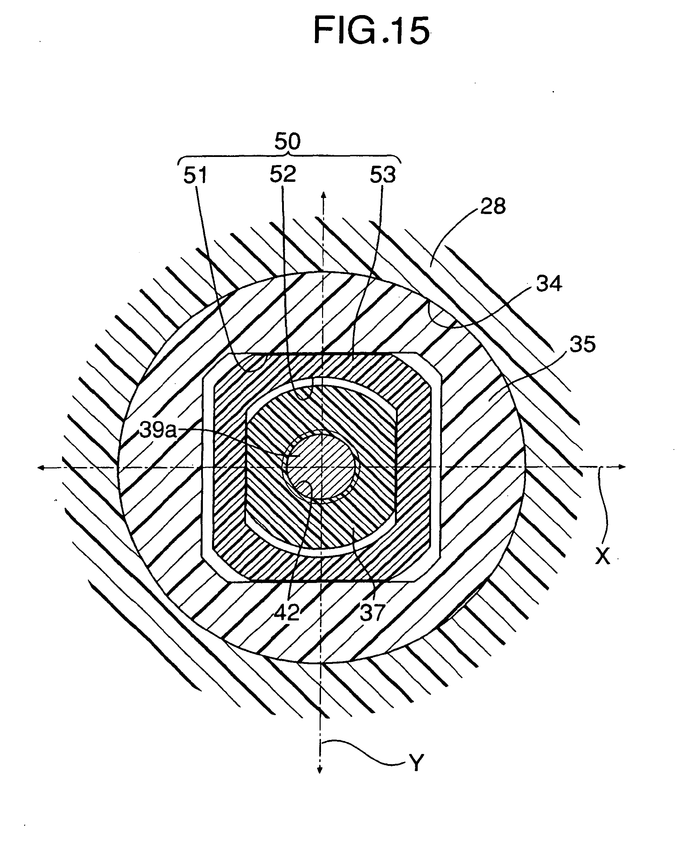

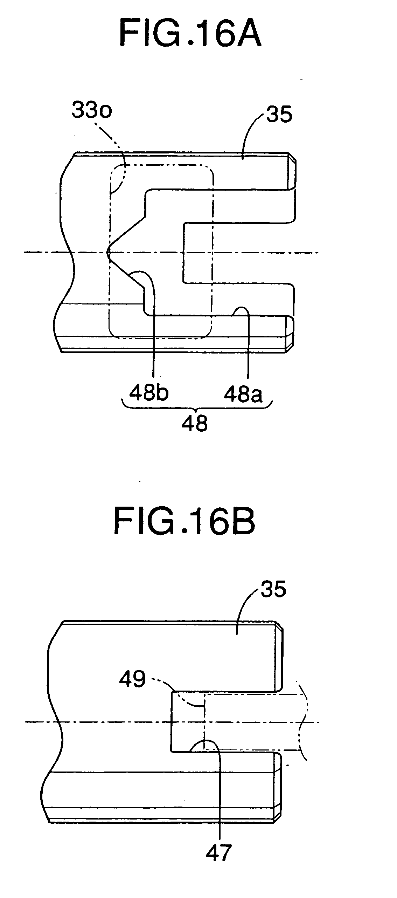

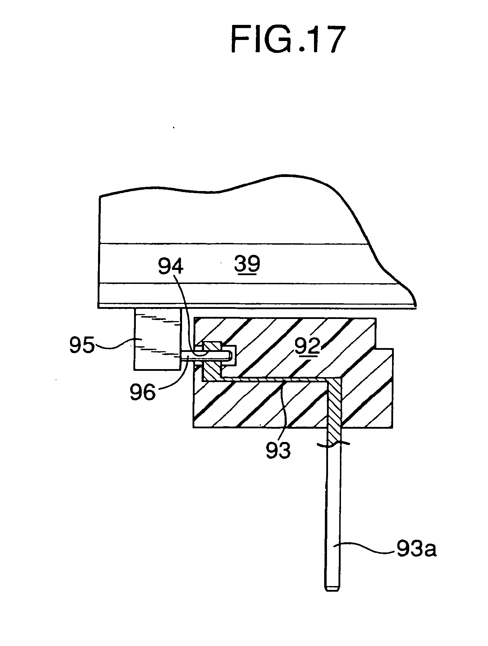

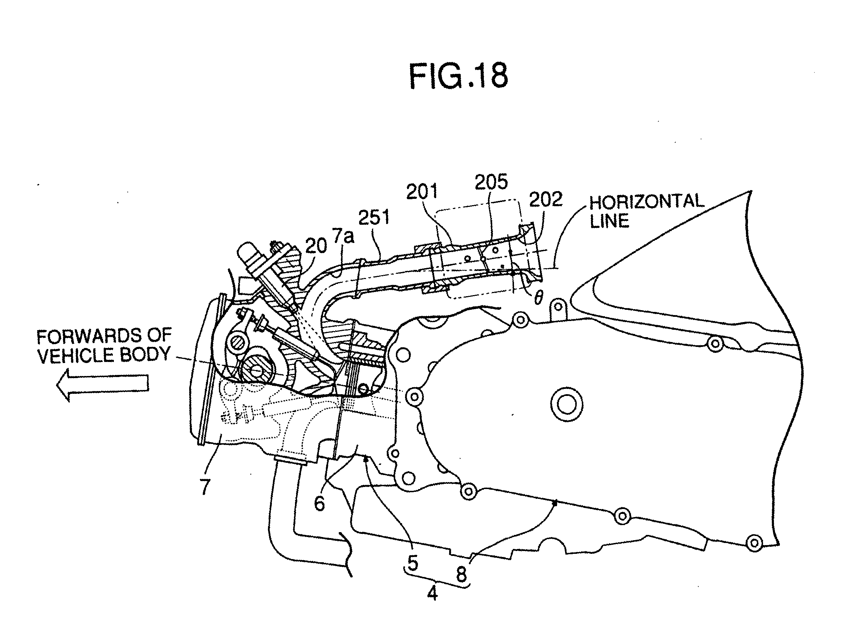

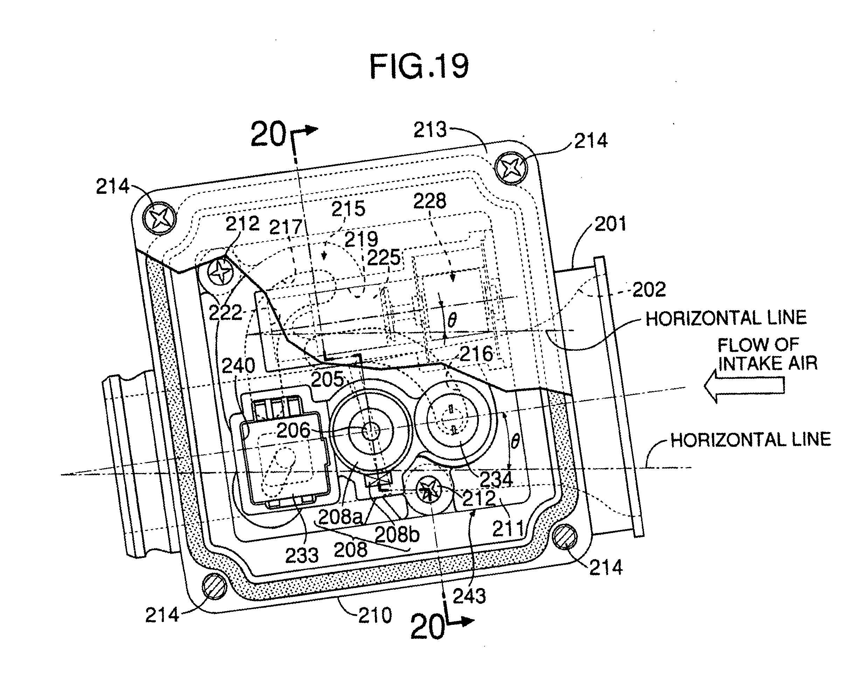

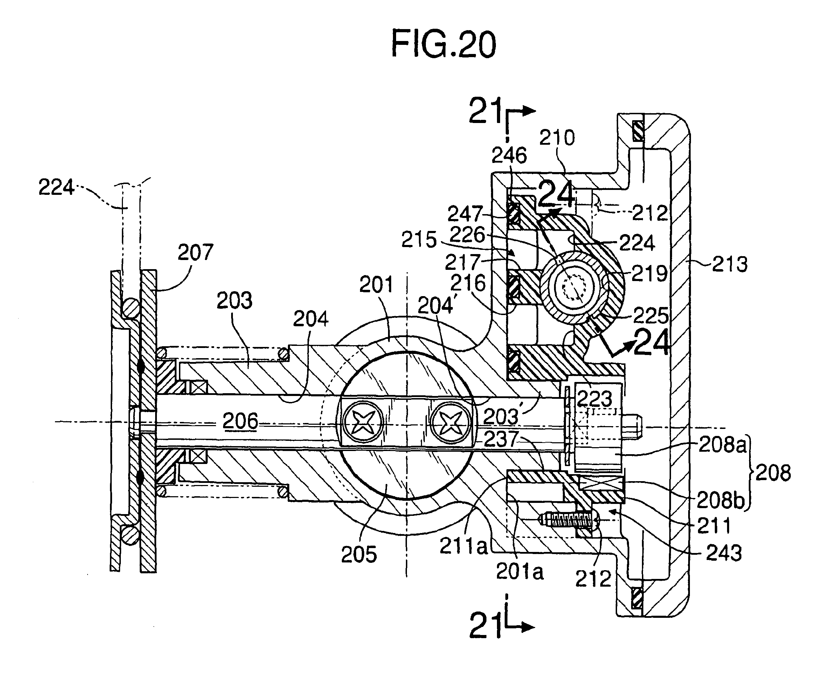

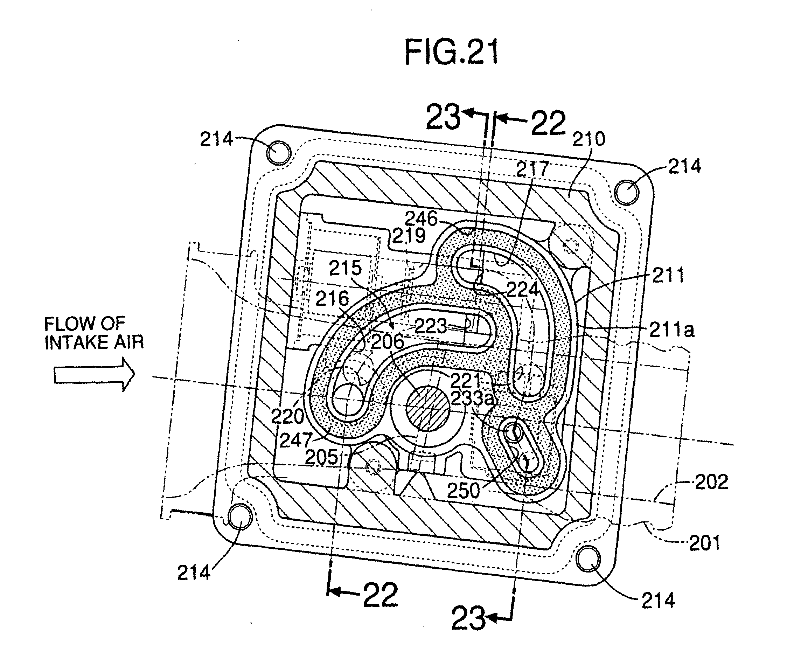

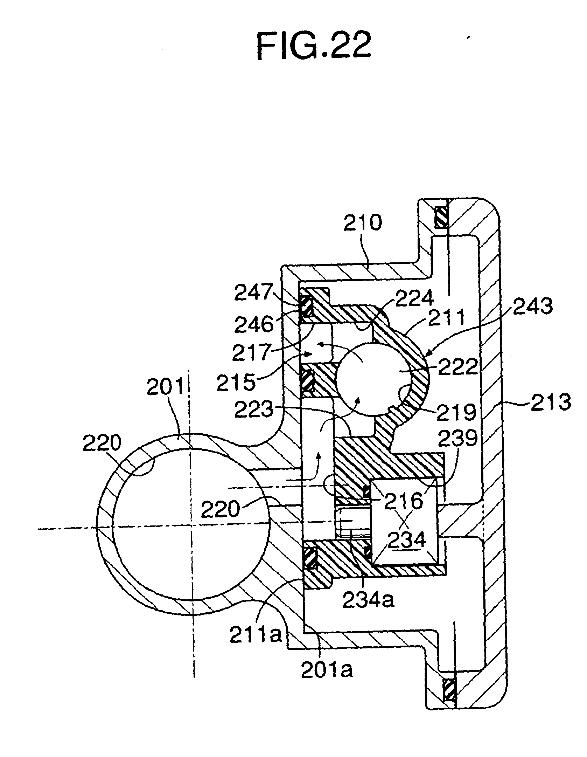

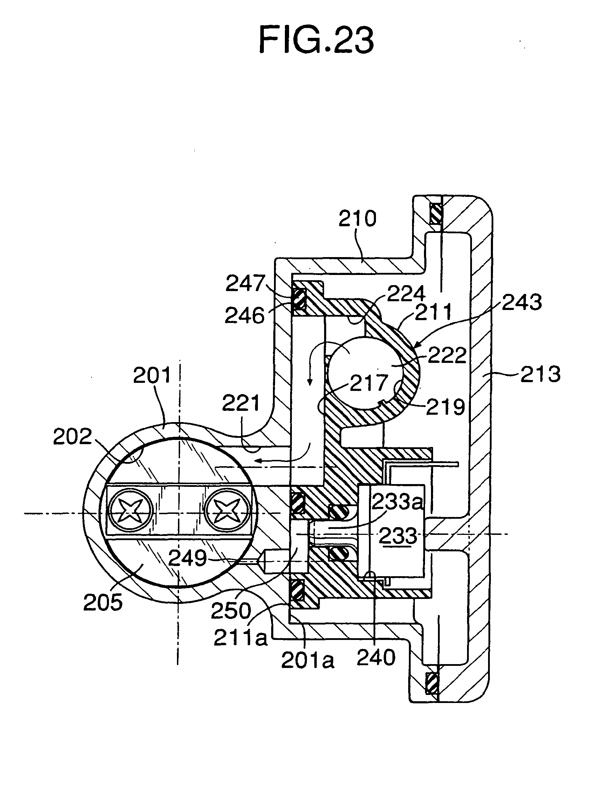

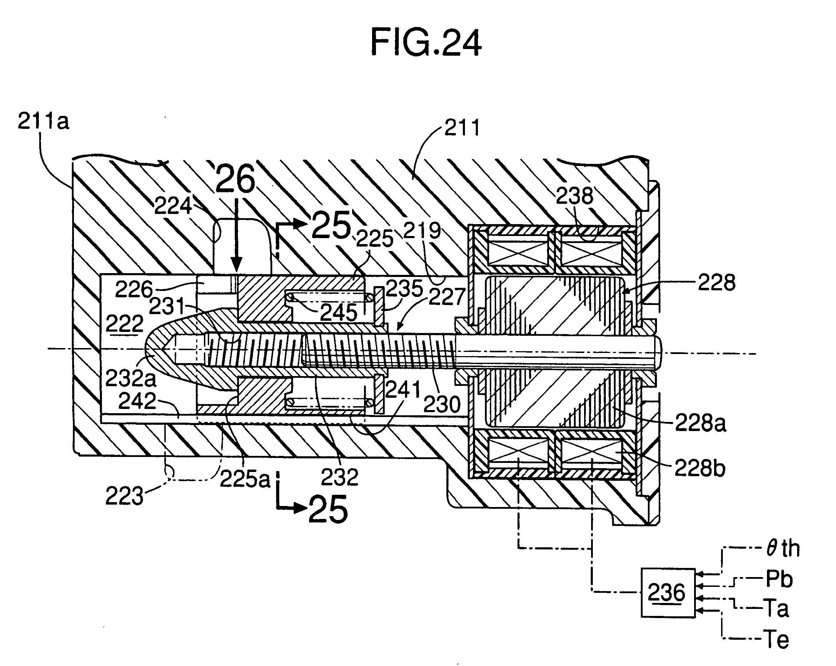

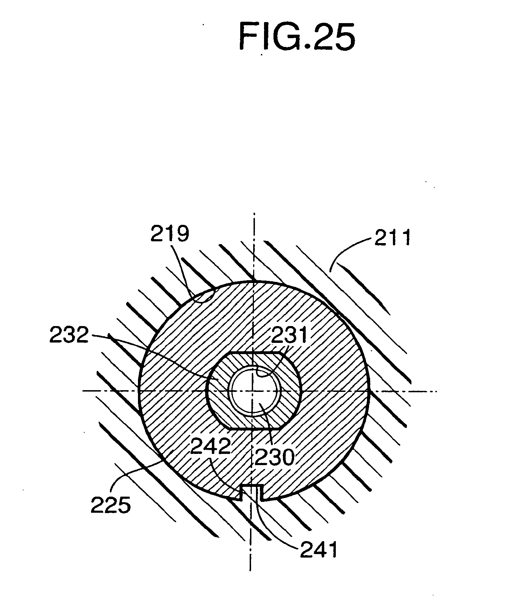

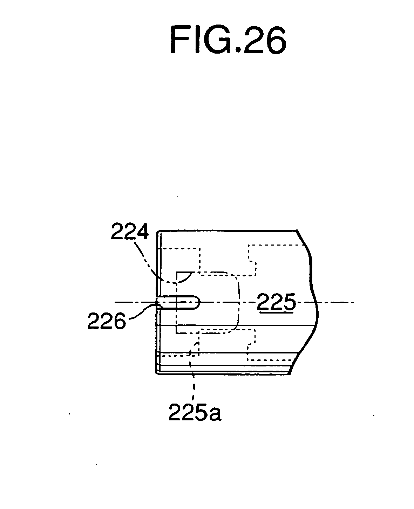

Fig.1 is a side view of a two-wheeled motor vehicle provided with an intake-air amount control system according to a first embodiment of the present invention; Fig.2 is an enlarged sectional view of a portion indicated by 2 in Fig.2; Fig.3 is a sectional view taken along a line 3-3 in Fig.2; Fig.4 is an exploded perspective view of the intake-air amount control system; Fig.5 is a side view of the intake-air amount control system; Fig.6 is a view taken in the direction of an arrow 6 in Fig.5; Fig.7 is a view taken in the direction of an arrow 7 in Fig.5; Fig.8 is a view taken in the direction of an arrow 8 in Fig.7; Fig.9 is a sectional view taken along a line 9-9 in Fig.7; Fig.10 is a sectional view taken along a line 10-10 in Fig.5; Fig.11 is a sectional view taken along a line 11-11 in Fig.5; Fig.12 is a sectional view taken along a line 12-12 in Fig.5; Fig.13 is an enlarged view of a section around a bypass valve shown in Fig.12; Fig.14 is a sectional view taken along a line 14-14 in Fig.5; Fig.15 is a sectional view taken along a line 15-15 in Fig.13; Fig.16A is a side view of the bypass valve taken from the side of a metering groove; Fig.16B side view of the bypass valve, taken from the side of a key groove; and Fig. 17 is an enlarged sectional view of a portion indicated by 17 in Fig.12. Fig.18 is a vertical sectional side view of essential portions of an engine for a two-wheeled motor vehicle provided with an intake-air amount control system according to a second embodiment of the present invention; Fig.19 is a partially broken side view of the intake-air amount control system for the engine; Fig.20 is a sectional view taken along a line 20-20 in Fig.19; Fig.21 is a sectional view taken along a line 21-21 in Fig.20; Fig.22 is a sectional view taken along a line 22-22 in Fig.21; Fig.23 is a sectional view taken along a line 23-23 in Fig.21; Fig.24 is a sectional view taken along a line 24-24 in Fig.20; Fig.25 is a sectional view taken along a line 25-25 in Fig.24; and Fig.26 is a side view of a bypass valve, taken in the direction of an arrow 26 in Fig.25.

### BEST MODE FOR CARRYING OUT THE INVENTION

The best mode for carrying out the present invention will be described hereinafter with reference to the accompanying drawings.

A first embodiment of the present invention shown in Figs.1 to 17 will now be described.

Referring to Figs.1 to 3, a two-wheeled motor vehicle 1 is constructed into a scooter type in which a power unit 4 is disposed just below a longitudinally long luggage box 3 with a tandem-type seat 2 also serving as a lid. The power unit 4 comprises an engine 5 having a cylinder block 6 inclined largely forwards, and a continuously variable transmission 8 having a transmission case 10 extending rearwards and integrally connected to one side of a crankcase 9 of the engine 5. A rear wheel 16 as a driven wheel is pivotally supported at a rear end of the transmission case 10.

In a body frame 11 of the two-wheeled motor vehicle 1, upper brackets 12, 12 are provided at connections between a pair of left and right upper frames 11a, 11a for supporting the luggage box 3 and upward-turned rear ends of a pair of left and right down tubes 11b, 11b extending from a head pipe. On the other hand, a pair of left and right lower brackets 13, 13 are formed on an upper surface of the crankcase 9 of the engine 5 and swingably carried at an intermediate portion of a crank-shaped engine hanger 14 swingably carried at its opposite ends on the upper brackets 12, 12. Thus, the power unit 4 is vertically swingably supported on the body frame 11, and a reaction unit 26 for buffering the vertical swinging movement of the power unit 4 is mounted between rear frames 11, 11 and the transmission case 10.

An intake port 7a is defined in a cylinder head 7 coupled to a front end of the cylinder block 6, so that its upstream end opens rearwards of a vehicle body. A throttle body 17 is mounted to the cylinder head 7 through a connecting tube 15 and has an intake passage 17a connected to the intake port 7a. In this case, the intake passage 17a in the throttle body 17 is provided with a gradient θ with its upstream end turned rearwards and its upstream end turned slightly upwards. Therefore, the throttle body 17 is substantially of a horizontal type. An air cleaner 19 is connected to a rear end of the throttle body 17 through an intake duct 18 passing above the engine hanger 14.

A fuel injection valve 20 for injecting fuel toward a downstream end of the intake port 7a is mounted in the cylinder head 7.

An intake-air amount control system according to the present invention, which includes the throttle body 17, will now be described in detail.

As shown in Figs. 4 to 8, a butterfly-type throttle valve 21 is disposed in the intake passage 17a in the throttle body 17 for opening and closing the intake passage 17a, and a valve shaft 22 supporting the throttle valve 21 is rotatably carried on left and right sidewalls of the throttle body 17 to horizontally traverse the intake passage 17a. A throttle drum 23 is secured to one end of the valve shaft 22 protruding to one side of the throttle body 17, and a single throttle cable 24 and a return spring 25 for biasing the throttle valve 21 in a closing direction are connected to the throttle drum 23, so that the throttle valve 21 is opened by pulling the throttle cable 24 by a throttle operating member (not shown).

A mounting flange 27 is integrally formed on an outer wall of the throttle body 17, from which the other end of the valve shaft 22 protrudes, so that the flange 27 is parallel to the intake passage 17a and perpendicular to the valve shaft 22. A joint surface 28f of a control block 28 of a synthetic resin formed separately from the throttle body 17 is detachably coupled to the mounting flange 27 by a plurality of bolts 29. A bypass 30 is defined between the throttle body 17 and the control block 28 and connected to the intake passage 17a around the throttle valve 21.

As best shown in Figs.4, 9 and 13, the bypass 30 is comprised of a bypass inlet 31i made in the throttle body 17 to permit a portion of the intake passage 17a upstream from the throttle valve 21 to communicate with a mounting surface 27f of the mounting flange 27, a bypass outlet 31o made in the throttle body 17 to permit a portion of the intake passage 17a downstream from the throttle valve 21 to communicate with the mounting surface 27f of the mounting flange 27, a bypass upstream groove 32i defined in the mounting surface 27f of the mounting flange 27 with one end connected to the bypass inlet 31i, a bypass downstream groove 32o defined in the mounting surface 27f of the mounting flange 27 with one end connected to the bypass outlet 31o, a valve bore inlet 33i defined in the control block 28 and leading to the other end of the bypass upstream groove 32i, a valve bore outlet 33o defined in the control block 28 and leading to the other end of the bypass downstream groove 32o, and a bottomed cylindrical valve bore 34 defined in the control block 28 in parallel to the intake passage 17a to permit the communication between the valve bore inlet 33i and the valve bore outlet 33o. In this case, the valve bore 34 is disposed above the bypass inlet 31i and the bypass outlet 31o, and the valve bore inlet 33i and the valve bore outlet 33o open into a lower surface of the valve bore 34. Open surfaces of the bypass upstream and downstream grooves 32i and 32o are covered with the joint surface 28f of the control block 28.

Referring to Figs.12 and 13, a piston-type bypass valve 35 for controlling the amount of communication between the valve bore inlet 33i and the valve bore outlet 33o is slidably received in the valve bore 34. A drive member 37 for driving the valve 35 in an axial direction is connected to the valve 35 through an Oldham's joint 50, so that the drive member 37 and the valve 35 can be displaced in a diametrical direction, and an output shaft 39a of a step motor 39 is connected to the drive member 37 through a screw mechanism 40. More specifically, the output shaft 39a formed as a threaded shaft is threadedly engaged into a threaded bore 41 in the drive member 37, so that the drive member 37 can be advanced and retracted axially by the rotation of the output shaft 39a, and the bypass valve 35 can be also advanced and retracted through the Oldham's joint 50.

The step motor 39 is inserted into an actuator housing 42 mounted coaxially with the valve bore 34 and opening into one side of the control block 28 , and is retained by a plug 44 threadedly mounted in an opening in the actuator housing 42 with a seal member 43 interposed therebetween.

As best shown in Figs.16A and 16B, the bypass valve 35 is provided with a relatively deep cylindrical bottomed hollow portion 45 which opens toward a bottom of the valve bore 34, and a notched key groove 47 and a metering groove 48 permitting the communication between the inside and outside of the bottomed hollow portion 45. A key 49 rising from the bottom of the valve bore 34 is engaged into the key groove 47 to perform a function of preventing the rotation of the bypass valve 35, while permitting the sliding movement of the bypass valve 35. The metering groove 48 is disposed in correspondence to the valve bore outlet 33o and comprised of a wider portion 48a extending with a constant groove width in an axial direction of the bypass valve 35, and a tapered portion 48b leading to one end of the wider portion 48a with its groove width smaller as being farther from the wider portion 48a.

The Oldham's joint 50 is comprised, as shown in Figs.13 and 15, of a first square bore 51 provided in the bypass valve 35 adjacent the bottomed hollow portion 45, a joint member 53 fitted in the first square bore 51 for sliding movement in a first lateral direction X, and a second square bore 52 which is provided in the joint member 53 and into which the drive member 37 is fitted for sliding movement in a second lateral direction Y perpendicular to the first lateral direction X. The drive member 37 is formed at a relatively large length so as to pass through the joint member 53, and is provided at one end thereof with a larger flange 37a abutting against one-end faces of the joint member 53 and the bypass valve 35. A smaller flange 37b is formed at the other end of the joint member 53 and located within the bottomed hollow portion 45, and a retaining spring 54 is mounted under compression between the smaller flange 37b and the bypass valve 35 for biasing the valve 35 toward the larger flange 37a. Therefore, the bypass valve 35 is axially resiliently clamped by the larger flange 37a and the retaining spring 54 on the drive member 37, and axially opposite surfaces of the valve 35 are in communication with each other through the first and second square bores 51 and 52 and through a sliding gap between the valve 35 and the valve bore 34. The joint member 53 is clamped axially by a step 35a provided on the bypass valve 35 and facing the first square bore 51 and by the larger flange 37a of the drive member 37.

As can be seen from Figs.9, 13 and 14, the bypass valve 35 and the step motor 39 arranged in parallel to and coaxially with the intake passage 17a are disposed above the valve shaft 22 disposed horizontally on the throttle valve 21. Moreover, the bypass valve 35 is disposed to face toward an upstream portion of the intake passage 17a, and the step motor 39 is disposed to face toward a downstream portion of the intake passage 17a, and as a result, the bypass downstream groove 32o is longer than the bypass upstream groove 32i.

The disposition of the valve bore 34 and thus the bypass valve 35 in parallel to the intake passage 17a ensures that the intake-air amount control system is constructed compactly. The step motor 39 and the bypass valve 35 can be disposed with a good balance above the throttle valve shaft 22, which also contributes to the compactness of the intake-air control system.

Referring to Figs.12 and 13, the actuator housing 42 has a diameter larger than that of the valve bore 34 arranged coaxially in front of the housing 42, and includes an annular step 55 formed at a boundary with the valve bore 34. A seal member 57 is clamped between the annular step 55 and a front end face of the step motor 39 mounted in the actuator housing 42. Namely, the seal member 57 is retained in a fixed position between the front end face of the step motor 39 and the annular step 55 simultaneously with the mounting of the step motor 39 in the actuator housing 42, leading to a good assemblability.

The seal member 57 comprises an annular reinforcing plate 58 made of a synthetic resin, and an elastic cover 59 made of a rubber and mold-coupled to the reinforcing plate 58 to wrap the latter. The elastic cover 59 has a pair of front and rear side lips 60, 60 formed on its outer peripheral surface, and an inner peripheral lip 61 formed on its inner peripheral surface. The side lips 60, 60 are in close contact with front end faces of the annular step 55 and the step motor 39, respectively, and the inner peripheral lip 61 is in close contact with an outer peripheral surface of a base portion of the output shaft 39a. The side lips 60, 60 and the inner peripheral lip 61 are retained appropriately in sealing attitudes by the reinforcing plate 58 and hence, can exhibit a good sealing function at all times.

A plurality of anchoring bores 62 are provided in the reinforcing plate 58, and the elastic cover 59 is charged into the anchoring bores 62, so that the force of coupling of the reinforcing plate 58 and the elastic cover 59 is increased. In addition, a reduction in weight of the seal member 57 is provided by making the reinforcing plate 58 of the synthetic resin.

Referring to Figs.5, 10 and 11, a throttle sensor 64 for detecting an opening degree of the throttle valve 21 is mounted in the control block 28. The throttle sensor 64 includes a case 66 fitted into a mounting recess 65 defined in the outer surface of the control block 28, a rotor 67 connected to an end of the valve shaft 22 of the throttle valve 21 within the case 66, and a stator 68 secured to the case 66 to detect a rotational angle of the rotor 67 as an opening degree of the throttle valve 21.

As shown in Figs . 5 , 9 and 14, a first sensor-mounting bore 71 is provided in the throttle body 17 and the control block 28 on one side of the mounting recess 65 of the throttle sensor 64, and opens into an upstream portion of the intake passage 17a, while extending perpendicular to the mounting flange 27, and an intake-air temperature sensor 73 for detecting a temperature of air in the upstream portion of the intake passage 17a is mounted in the first sensor-mounting bore 71 from the side of the control block 28. A boost vacuum detecting bore 74 is defined in the throttle body 17 to open into a downstream portion of the intake passage 17a, and a second sensor-mounting bore 72 is defined in the control block 28 and located just above the first sensor-mounting bore 71. A communication passage 75 is defined in the mounting surface 27f of the mounting flange 27 in the form of a bent groove extending around below the throttle sensor 64 to permit the communication between the boost vacuum detecting bore 74 and the second sensor-mounting bore 72 . A boost vacuum sensor 76 for detecting a negative pressure of air drawn in the downstream portion of the intake passage 17a, i.e., a boost vacuum in the engine 5 is mounted in the second sensor-mounting bore 72 through the boost vacuum detecting bore 74. Thus, the intake-air temperature sensor 73 and the boost vacuum sensor 76 are disposed in proximity to each other.

The bypass inlet 31i at an upstream end of the bypass 30 is disposed in proximity to the first sensor-mounting bore 71 on the side of the intake passage 17a upstream from the first sensor-mounting bore 71. The communication passage 75 is disposed to extend around below the throttle sensor 64, while the bypass downstream groove 32o is disposed to extend around above the throttle sensor 64.

Referring to Figs . 4 to 8 and 14, a vertically flattened coupler 80 is mounted at an upper portion of the control block 28. The coupler 80 comprises a coupler body 81 formed integrally on the control block 28, and a large number of connectors 82 embedded in the coupler body 81. The coupler body 81 extends beyond the mounting flange 27 to just above the throttle body 17, with its coupling opening 80a turned in a direction opposite from the control block 28. An external coupler 83 connecting a wire harness 86 leading to a power source or the like is coupled in the coupling opening 80a.

The control block 28 having such coupler 80 is in the form of a box with its outer end face opposite from the mounting flange 27 being opened, and a substrate 84a of an electronic control unit 84 is placed on the outer end face of the control block 28. In this case, the intake-air temperature sensor 73, the boost vacuum sensor 76 and a connecting terminal 64a of the throttle sensor 64 as well as inner ends of the connectors 82 of the coupler 80 are connected directly to the substrate 84a by soldering (see Figs.10 to 12). Reference character 85 designates various semiconductor elements provided on the substrate 84a.

In the horizontal throttle body 17, even if a foreign matter such as fuel oil droplets enters into the boost vacuum detecting bore 74 through the intake passage 17a by a blow-back phenomenon of the engine 5, the foreign matter cannot be raised up to the boost vacuum sensor 76, because a large drop is provided between the boost vacuum detecting bore 74 and the boost vacuum sensor 76 located above the boost vacuum detecting bore 74 by the communication passage 75 and moreover, the communication passage 75 is the bent passage having a flow path resistance. Therefore, it is possible to protect the boost vacuum sensor 76 from the foreign matter to ensure its function and durability.

The intake-air temperature sensor 73 and the boost vacuum sensor 76 are disposed collectively on one side of the throttle sensor 64 and hence, they can be connected collectively to the electronic control unit 84, leading to the compactness of the unit 84.

Further, the groove which is the communication passage 75 as well as the bypass upstream and downstream grooves 32i and 32o which are the principal portions of the bypass 30 are defined in the mounting surface 27f of the mounting flange 27 of the throttle body 17. Therefore, these grooves can be formed simultaneously with the formation of the throttle body 17 and thus, a special working or processing for forming the grooves is not required, thereby providing an enhancement in productivity.

Yet further, since the bypass inlet 31i is disposed in proximity to the first sensor-mounting bore 71 located below the second sensor-mounting bore 72 on the side of the intake passage 17a upstream from the mounting bore 71, the first and second sensor-mounting bores 71 and 72 and the bypass inlet 31i can be disposed collectively without interference with one another, which can contribute to the compactness of the control block 28.

Yet further, since the bypass downstream groove 32o and the communication passage 75 are disposed to surround the throttle sensor 64 from above and below, they can be disposed compactly around the throttle sensor 64 without interference with each other, which can contribute to the further compactness of the control block 28.

Referring again to Fig.4, positioning projections 87 are formed at a pair of corners on one of diagonal lines on the outer end face of the control block 28 having the coupler 80, and threaded bores 88 are defined at corners on the other diagonal line. On the other hand, the substrate 84a is provided with positioning bores 89 corresponding to the positioning projections 87, and machine-screw bores 90 corresponding to the threaded bores 88. Thus, the substrate 84a is secured in a predetermined position to the control block 28 by fitting the positioning bores 89 into the positioning projections 87 and fitting the machine screws 91 inserted through the machine-screw bores 90 into the threaded bores 88.

A substantially rectangular parallelepiped connector piece 92 made of a synthetic resin is positioned and fixed in the control block 28 between the step motor 39 and the substrate 84a, as shown in Figs.12 and 17. A plurality of lead frames 93, 93 are embedded in the connector piece 92 , and a connecting terminal 93a formed at one end of each of the lead frames 93 is connected directly to the substrate 84a by soldering, and a connector bore 94 is defined in the other end of each of the lead frames 93.

On the other hand, a plurality of connector pins 96, 96 protrude from a front end face of a terminal lead-out portion 95 projectingly provided on the outer side surface of the step motor 39 (an end face forward in a direction of insertion of the step motor 39 into the actuator housing 42). The connector pins 96, 96 are fitted into the connector bores 94, 94 simultaneously with the insertion of the step motor 39 into the actuator housing 42.

The electronic control unit 84 controls not only the operations of the step motor 39 and the fuel injection valve 20 but also the operation of an ignition device (not shown), based on output signals from an engine rotational speed sensor, an engine temperature sensor and the like (which are not shown) in addition to the throttle sensor 64 , the boost vacuum sensor 76 and the intake-air temperature sensor 73, and the delivery and receipt of the signals and electric power are carried out through the coupler 80 and the external coupler 83 connected to the coupler 80.

As shown in Figs. 4 and 9, a seal groove 97 is defined in the mounting surface 27f of the mounting flange 27 to surround the peripheries of the bypass upstream groove 32i, the bypass downstream groove 32o, the first sensor mounting bore 71, the boost vacuum detecting bore 74 and the communication passage 75, and a seal member 98 is mounted in the seal groove 97 to come into close contact with the control block 28, whereby the bypass upstream groove 32i, the bypass downstream groove 32o and the like are maintained air-tight.

As shown in Figs. 4, 11 and 12, a cap 101 made of an aluminum alloy plate for accommodation of the electronic control unit 84 is fitted in a spigot joint manner over a stepped fitting face 100 formed around an outer periphery of the outer end of the control block 28 having the coupler 80. In this case, a locking projection 105 and a locking bore 106 (see Figs . 4 and 11) provided in these fitting faces are resiliently engaged with each other. The cap 101 is formed by subjecting the aluminum alloy plate to a pressing, whereby a good appearance free of wrinkles is provided to the cap. Therefore, the cap 101 makes the appearance of the control block 28 good and hence, This is effective when the control block 28 is exposed to the outside, as in the two-wheeled motor vehicle 1.

A potting port 102 (see Figs. 8 and 14) is provided in the control block 28 in proximity to an open end face of the cap 101 to communicate with the inside of the cap 101 and to open to a side opposite from the cap 101. The cap 101 is turned downwards, and a synthetic resin 103 is potted into the cap 101 through the potting port 102, until it reaches the spigot-fitting portion of the cap 101, whereby the electronic control unit 84 is wrapped with the synthetic resin 103, and the spigot-fitting portion of the cap 101 is sealed.

The synthetic resin 103 protects the electronic control unit 84 from raindrops, dust and the vibration. Especially, the water-proofing and the dust-proofing can be achieved effectively by sealing the spigot-fitting portion of the cap 101 over the control block 28 and further, the force of coupling of the cap 101 to the control block 28 can be strengthened by the adhesive force of the potting resin 103.

Moreover, the electronic control unit 84 is accommodated into the cap 101; the cap 101 is turned downwards; and the synthetic resin 103 is then potted into the cap 101 through the potting port 102 and hence, the protection of the electronic control unit 84 and the coupling of the cap 101 can be achieved efficiently with a necessary and minimum amount of the potting resin 103. Therefore, it is possible to prevent the synthetic resin 103 from entering into the bypass valve 35 and the step motor 39 located above the cap 101.

In the potting, the amount of synthetic resin 103 potted can be adjusted easily, while visually observing the potting state of the synthetic resin into the cap 101 from the potting port 102. In addition, the potting resin 103 wraps even connections of the connecting terminals 64a, 73a and 76a of the sensors 64, 73 and 76 and the connecting terminal 93a of the connector piece 92 to the substrate 84a and hence, the anti-vibration properties of the connecting terminals 64a, 73a, 76a and 93a can be enhanced.

Referring again to Figs.3 and 7, the control block 27 including the sensors 64, 73 and 76 and the electronic control unit 84 is disposed on one of left and right sides of the throttle body 17, while the coupler 80 is disposed above the throttle body 17, i.e., between the throttle body 17 and a bottom wall of the luggage box 3. By disposing the sensors 64, 73 and 76 as well as the electronic control unit 84 and the coupler 80 in the dispersed manner as described above, they can be disposed easily in a narrow space around the throttle body 17 in the two-wheeled motor vehicle 1. Especially, the coupler 80 can be vertically flattened and hence, even if the coupler 80 is disposed above the throttle body 17, the bottom of the luggage box 3 disposed above the coupler 80 may be little moved upwards, and the volume of the luggage box 3 can be increased.

Moreover, a coupling opening 80a for the external coupler 83 is provided in the coupler 80 on a side from the electronic control unit 84 and hence, the connection of the external coupler 83 to the coupler 80 can be conducted easily without being obstructed by the electronic control unit 84 and the engine 5, leading to a good assemblability and a good maintenance.

The throttle drum 23 is secured to one end of the laterally extending valve shaft 22 opposite from the electronic control unit 84, and the throttle cable 24 connected to the throttle drum 23 is disposed to pass below the coupling opening 80a in the coupler 80 (see Fig.8). This makes it possible to avoid the interference of the throttle cable 24 and the wire harness 86 of the external coupler 83 coupled to the coupler 80 with each other, thereby providing enhancements in assemblability and maintenance.

Further, as shown in Figs. 2, 3 , 7 and 8, the throttle cable 24 connected to the throttle drum 23 once extends rearwards through a lower portion of the throttle drum 23; is bent into a U-shape within a crank portion of the engine hanger 14; then extends forwards along the down tube 11b on one side of the body frame 11, and is connected to the throttle operating member (not shown) associated with a steering handlebar 36 (see Fig.1).

Thus , during travelling of the two-wheeled motor vehicle 1, when the power unit 4 is moved vertically in response to the expansion or contraction of the reaction unit 26, the throttle body 17 is also swung along with the power unit 4. However, mainly the U-shaped bent portion of the throttle cable 24 can be flexed with such swinging movement without difficulties, thereby preventing an excessive stress from being generated in the throttle cable 24 to ensure the durability of the throttle cable 24. Moreover, notwithstanding that the throttle drum 23 and the coupling opening 80a of the coupler 80 are disposed in the same side of the throttle body 17, by the disposition of the single throttle cable 24 in the above-described manner, a relatively large working space, which is not obstructed by the throttle cable 24, can be ensured around the coupling opening 80a of the coupler 80, thereby facilitating the connection of the external coupler 83 to the coupling opening 80a.

The operation of the above-described intake-air amount control system will be described below.

When the throttle valve 21 is in a fully closed state, the electronic control unit 84 determines operating conditions of the engine such as during starting, first idling and usual idling of the engine and during application of an engine brake, based on the output signals from the throttle sensor 64, the intake-air temperature sensor 73, the boost vacuum sensor 76 and the like, and operates the step motor 39 to rotate or reverse the output shaft 39a in order to provide an opening degree of the bypass valve 35 corresponding to the operating conditions.

When the output shaft 39a is rotated or reversed, the drive member 37 is advanced or retracted axially to slide the bypass valve 35 forwards or rearwards along the valve bore 34 through the joint member 53, thereby increasing or decreasing the area of the metering groove 48 opening into the valve bore outlet 33o, i.e., the opening degree of the bypass 30 to control the flow rate of intake air in the bypass 30. Especially, the flow rate of intake air can be controlled finely to from zero to a predetermined maximum value by advancing or retracting the tapered portion 48b of the metering groove 48 relative to the valve bore outlet 33o. As a result, the starting, the first idling and the usual idling of the engine can be carried out automatically and appropriately.

In this case, even if the Oldham's joint 50 is dislocated due to a manufacture error between axes of the bypass valve 35 and the output shaft 39a of the step motor 39, such dislocation is absorbed by the movement of the joint member 53 in the first lateral direction X and the movement of the drive member 37 in the second lateral direction Y. Therefore, irrespective of such dislocation, the smooth sliding movement of the bypass valve 35 can be ensured and at the same time, the vibration of the bypass valve 35 can be suppressed by the retaining spring 54.

In the fully closed state of the bypass valve 35, a charging vacuum in the engine 5 is applied to a side of the bypass valve 35 facing the valve bore outlet 33o. However, the Oldham' s joint 50 permits the parallel movement of the bypass valve 35 in a direction of application of the charging vacuum at that time and hence, the bypass valve 35 can be reliably brought into close contact with the periphery of the valve bore outlet 33o to prevent or minimize the leakage of intake air in the bypass from the valve bore outlet 33o. Therefore, a specially-high dimensional accuracy is not required for the valve bore 34 and the bypass valve 35, which can contribute to an enhancement in productivity.

Further, the axially opposite end faces of the bypass valve 35 communicate with each other through the first and second square bores 51 and 52 in the Oldham's joint 50 and the sliding gap between the valve 35 and the valve bore 34, and hence, even if any pressure is transmitted to the valve bore 34, no difference in pressure is generated between the axially opposite end faces of the bypass valve 35. Therefore, the bypass valve 35 can be operated lightly even by a relatively small output from the step motor 39. This means that a decrease in output from the step motor 39 and in its turn, a reduction in size of the step motor 39 can be realized, while enhancing the responsiveness of the bypass valve 35.

Yet further, the bypass valve 35 is biased from the valve bore inlet 33i in a direction to the valve bore outlet 33o by the retaining spring 54, and the biasing force is supported by the larger flange 37a of the drive member 37 into which the output shaft 39a of the step motor 39 is fitted directly. Therefore, especially, when the output shaft 39 is rotated in a direction to close the bypass valve 35, the drive member 37 directly pushes the bypass valve 35 in the closing direction by the larger flange 37a and hence, the closing speed of the bypass valve 35 can be increased irrespective of the presence of the retaining spring 54.

On the other hand, if the throttle valve 21 is gradually opened, an amount of intake air corresponding to an increment in opening degree is supplied through the intake passage 17a to the engine 5, whereby the output from the engine can be controlled.

It should be noted here that in such intake-air amount control system, the control block 28 separate from the mounting flange 27 of the throttle body 17 and having the coupler 80 is coupled to the mounting flange 27 of the throttle body 17; and the bypass valve 35, the step motor 39, the intake-air temperature sensor 73, the boost vacuum sensor 76, the throttle sensor 64 and the electronic control unit 84 are mounted in the control block 28. Therefore, it is possible to carry out the working of processing of the throttle body 17 and the fabrication of a controlling assembly including the control block 28 in parallel to each other. Especially, before coupling of the control block 28 to the throttle body 17, the examination of the functions of the step motor 39, the bypass valve 35, the sensors 64, 73 and 76, the electronic control unit 84 and the like can be carried out by properly connecting the power source and the like to the coupler 80. Therefore, only the components passing such examination are mounted to the throttle body 17 and thus, there is no wastefulness in the assembling operation, whereby an enhancement in productivity can be provided.

Moreover, the electronic control unit 84 is placed on the outer end face of the control block 28, and the step motor 39, the sensors 64, 73 and 76 and the coupler 80 are electrically connected to one another through the electronic control unit 84. Therefore, connections between the step motor 39, the sensors 64, 73 and 76 and the coupler 80 can be simplified to provide a further enhancement in assemblability.

Further, the connector pins 96 are provided on the step motor 39 to protrude in the direction of insertion into the actuator housing 42, and the connector bores 94 for fitting of the connector pins 96 are provided in the lead frame 93 leading to the coupler 80 on the control block 28. Therefore, the electric connection between the step motor 39 and the coupler 80 is achieved simultaneously with the mounting of the step motor 39 in the control block 28 and hence, a special electrically connection operation is not required, leading to a further enhancement in assemblability.

The lead frame 93 having the connector bores 94 is embedded in the connector piece 92 as a small part positioned and fixed in the control block 28 between the step motor 39 and the electronic control unit 84 and hence, such embedding is extremely easy and precise, as compared with a case where the lead frame 93 is embedded in the control block 28 as a large part. The connector bores 94 in the lead frame 93 can be disposed precisely at predetermined locations by setting the connector piece 92 in the control block 28 and thus, the proper fitting of the connector bores 94 with the connector pins 96 of the step motor 39 is guaranteed.

Further, the actuator housing 42, in which the step motor 39 is mounted, is mounted to open into the outer peripheral surface of the control block 28 different from the outer end face of the control block 28 on which the electronic control unit 84 is placed. Therefore, the control block 28 can be constructed compactly, and the mounting and removal of the step motor 39 are possible, irrespective of the placement of the electronic control unit 84, and thus, the maintenance of the step motor 39 and the bypass valve 35 can be carried out easily.

When the operation of the engine 5 is in stoppage, moisture in the air within the valve bore 34 may be condensed in an inner wall of the valve bore 34, but condensed water drops are inhibited from entering into the step motor 39 by the seal member 57 disposed between the valve bore 34 and the actuator housing 42. Therefore, the step motor 39 can be protected, leading to an enhancement in durability thereof.

Especially, the seal member 57 is clamped between the step motor 39 and the annular step 55 between the valve bore 34 and the actuator housing 42, and the inner peripheral lip 61 is provided on the inner peripheral surface of the seal member 57 to come into close contact with the outer peripheral surface of the base portion of the output shaft 39a of the step motor 39. Therefore, the frictional resistance of the inner peripheral lip 61 on the rotating surface of the output shaft 39a is extremely small and hence, an influence to the responsiveness of the bypass valve 35 can be eliminated. Moreover, even with the bypass valve 35 designed so that the tip end of the output shaft 39a is exposed to the inside of the valve bore 34, the step motor 39 and the valve bore 34 can be reliably sealed from each other by the single seal member 57. Namely, the bypass valve 35 may be of any structure and hence, the seal member 57 can be utilized in a wider range of application.

In addition, when the operation of the engine 5 is in stoppage, in usual, the bypass valve 35 brings the valve bore outlet 33o into the fully closed state and hence, even if a fuel gas generated in a downstream portion of the intake passage 17a enters into a downstream portion of the bypass 30, the entering of the fuel gas into the valve bore 34 is inhibited by the bypass valve 35. Therefore, even if the sealing function of the seal member 57 should be detracted, the step motor 39 can be prevented from being exposed to the fuel gas, and the durability thereof can be ensured.

Further, the length of a portion of the bypass 30 downstream from the valve bore 34 is set at a sufficiently large value and hence, the fuel gas generated in the downstream portion of the intake passage 17a is difficult to pass through the sufficiently long downstream portion of the bypass. Therefore, the entering of the fuel gas into the valve bore 34 can be prevented to further contribute to the protection of the step motor 39.

In the bypass 30, the valve bore inlet 33i and the valve bore outlet 33o occupying positions higher in level than the bypass inlet 31i and the bypass outlet 31o open into the lower surface of the valve bore 34. Thus, a foreign matter such as dust is difficult to enter into the valve bore 34 from the valve bore inlet 33i and the valve bore outlet 33o and hence, it is possible to enhance the reliability for the operation of the bypass valve 35.

A second embodiment of the present invention will now be described with reference to Figs.18 to 26.

Referring to Fig.18, a power unit 4 is mounted on a vehicle body of a two-wheeled motor vehicle, as in the first embodiment, and an engine 5 and a continuously variable transmission 8 constituting the power unit 4 are of the same constructions as in the first embodiment. Therefore, in Fig.18, reference characters similar to those in the first embodiment are affixed to portions or components of the engine 5 and the continuously variable transmission 8, and the description of them is omitted.

An intake passage 202 in a throttle body 201 is connected through an intake pipe 251 to an intake port 7a defined in a cylinder head 7 of the engine 5. In this case, the intake passage 202 is provided with a gradient θ such that its upstream portion is turned slightly upwards along with the intake pipe 251, while its upstream end is turned rearwards of a vehicle. The upstream end of the intake passage 202 is of a funnel shape, and an air cleaner is connected to the upstream end.

Referring to Figs.19 and 20, a pair of bosses 203 and 203' are formed on opposite sides of an intermediate portion of the throttle body 201 and have shaft bores 204 and 204' perpendicular to an axis of the intake passage 202, respectively. A butterfly-type throttle valve 205 for opening and closing the intake passage 202 is secured to a valve shaft 206 rotatably carried in the shaft bores 204 and 204' . A throttle drum 207 for connecting a throttle cable 209 leading to a throttle operating member (not shown) is secured to one end of the valve shaft 206. A rotor 208a of a throttle sensor 208 for detecting an opening degree of the throttle valve 205 is secured to the other end of the valve shaft 206.

A housing 210 is integrally formed at one end of the throttle body 201 and has a bottom surface 210f in proximity to the intake passage 202 and parallel to the axis of the intake passage 202. The other boss 203' protrudes on the bottom surface 210f of the housing 210, and the shaft bore 204' in the boss 203' and the bottom surface 210a are disposed to be perpendicular to each other. The bottom surface 210f of the housing 210 is a mounting surface. A joint surface 211f of a control block 211 accommodated in the housing 210 is superposed on the mounting surfaced 210f, and the control block 211 is secured to the throttle body 201 by a bolt 212. A lid plate 213 is secured to an open surface of the housing 210 by a bolt 214 to air-tightly close the open surface.

A first accommodation bore 237 for accommodation of the other boss 203' and the rotor 208a therein is defined in the control block 211, and a pickup coil 208b is mounted to an inner wall of the first accommodation bore 237. The pickup coil 208b forms the throttle sensor 208 for electrically detecting an opening degree of the throttle valve 205 by cooperation with the rotor 208a.

As shown in Figs. 19 to 23, a bypass 215 is defined to extend from the throttle body 201 to the control block 211. The bypass 215 is comprised of a bypass inlet 220 (see Figs. 21 and 22) made in the throttle body 201 to permit the intake passage 202 and the mounting surface 210f to communicate with each other at a location upstream of the throttle valve 205, a bypass outlet 221 (see Figs. 21 and 23) made in the throttle body 201 to permit the intake passage 202 and the mounting surface 210f to communicate with each other at a location downstream of the throttle valve 205, a bypass upstream groove 216 defined in the joint surface 211f of the control block 211 with one end connected to the bypass inlet 220, a bypass downstream groove 217 likewise defined in the joint surface 211f of the control block 211 with one end connected to the bypass outlet 221, a valve bore inlet 223 opening into a groove bottom at a downstream end of the bypass upstream groove 216 , a valve bore outlet 224 opening into a groove bottom at an upstream end of the bypass downstream groove 217, and a cylindrical valve bore 34 defined in the throttle body 201 to permit the communication between the valve bore inlet 223 and the valve bore outlet 224. Thus, the bypass 215 is connected to the intake passage 202 so as to extend around the throttle valve 205.

In this case, the bypass inlet 220, the bypass outlet 221 and the shaft bores 204 and 204' are disposed in parallel to one another, so that they can be made at a stroke by a multi-spindle drilling machine. The valve bore outlet 224 is disposed above the valve bore inlet 223 and offset toward the bypass inlet 220, as shown in Fig.21. The cylindrical valve bore 222 is disposed so that it is parallel to the intake passage 202 and in proximity to the bypass upstream groove 216 and the bypass downstream groove 217, and so that the valve bore 222 overlaps with both of the valve bore inlet 223 and the valve bore outlet 224. Since the valve bore 222 is disposed in parallel to the intake passage 202 as described above, the valve bore 222 is provided with a small gradient θ (see Fig.19) similar to that of the intake passage 202 with the valve bore 222 located at a low level in a state in which the throttle body 201 has been connected to the intake pipe 251.

As shown in Figs.24 and 25, a piston-type bypass valve 225 is slidably received in the valve bore 222. To prevent the rotation of the bypass valve 225, a key 242 projectingly integrally provided on an inner peripheral surface of the valve bore 222 is engaged into a key groove 241 in an outer peripheral surface of the bypass valve 225.

The bypass valve 222 is provided with a recess 225a which opens into the valve bore 222, and a metering notched groove 226 permitting the recess 225a to communicate with the valve bore outlet 224. In a lower opening degree range of the bypass valve 225, the area of the notched groove 226 opening into the valve bore outlet 224 is controlled, whereby the amount of intake air in the bypass is adjusted finely. In a high opening degree range, the area of the valve bore outlet 224 opening into the valve bore 222 is controlled by an end face of the bypass valve 225, whereby the amount of intake air in the bypass is adjusted relatively largely.

A step motor 228 is disposed above the bypass valve 225 along the gradient θ (see Fig.19) and coaxially with the bypass valve 225 and has a rotor 228a connected to the bypass valve 225 through a screw mechanism 227. More specifically, an operating member 232 having a threaded bore 231 is non-rotatably fitted into a central portion of the bypass valve 225, and a threaded shaft 230 integrally coupled to the rotor 228a is threadedly engaged into the threaded bore 231 in the operating member 232. A stator 228b of the step motor 228 is accommodated and fixed in a second accommodation bore 238 provided in the control block 211 and leading to the valve bore 222.

An expanded portion 232a is formed at one end of the operation member 232 to abut against a ceiling surface of the recess 225a in the bypass valve 225, and a clip 235 is locked at the other end of the operating member 232. A coil spring 245 is mounted under compression between the clip 235 and the bypass valve 225 for biasing the bypass valve 225 in a direction of abutment against the shoulder 232a. In this manner, the operating member 232 is integrally connected with the bypass valve 225.

Referring again to Figs.21 to 23, a seal groove 246 is also defined in the joint surface 211f of the control block 211 to surround the bypass upstream groove 216 and the bypass downstream groove 217, and a seal member 247 is mounted in the seal groove 246 and comes into close contact with the mounting surface 210f upon superposition of the joint surface 211f on the mounting surface 210f of the throttle body 201. In this manner, open surfaces of the grooves 216 and 217 are air-tightly closed by the mounting surface 210f.

Third and fourth accommodation bores 239 and 240 open into an outer surface of the control block 211 opposite from the joint surface 211f . The fourth accommodation bore 240 communicates with a downstream portion of the intake passage 202 through a communication groove 250 in the control block 211 and an orifice 249 in the throttle body 201. An intake-air temperature sensor 234 is mounted in the third accommodation bore 239 with its sensing portion 234a facing the bypass upstream groove 216, and a boost vacuum sensor 233 is mounted in the fourth accommodation bore 240 with its sensing portion 233a facing the communication groove 250.

Information regarding operating conditions of the engine such as a throttle valve opening degree θth, a boost vacuum Pb and an intake-air temperature Ta detected respectively by the throttle sensor 208, the boost vacuum sensor 233 and the intake-air temperature sensor 234, an engine temperature Te detected by an engine-cooling water temperature sensor (not shown) and the like is input to an electronic control unit 236 connected to the step motor 228.

A control block assembly 243 is constructed by mounting the bypass valve 225, the step motor 228, the pickup coil 208b, the boost vacuum sensor 223 and the intake-air temperature sensor 234 to the control block 211.

The operation of the present embodiment will be described below.

When the throttle valve 205 is in a fully closed state, the electronic control unit 236 calculates an amount of current supplied to the step motor 228, based on the information regarding the operating conditions of the engine such as the throttle valve opening degree θth, the boost vacuum Pb, the intake-air temperature Ta, the engine temperature Te and the like input as described above, and carries out the supplying of current to rotate or reverse the rotor 228a, in order to provide an optimal opening degree of the bypass valve 225 corresponding to the operating conditions for the engine during starting, first idling and usual idling of the engine and during application of an engine brake. When the rotor 228a is rotated or reversed, the rotation is transmitted as an axial displacement to the piston-type bypass valve 225, while being reduced by the screw mechanism 227 and hence, the adjustment of the opening degree of the bypass valve 225 is carried out finely.

When the bypass valve 225 occupies a high opening degree position closer to the step motor 228, the end face of the bypass valve 225 faces the valve bore outlet 224 and hence, the amount of air flowing through the bypass 215 and drawn into the engine can be controlled to a relatively large value by the area of the valve bore 222 opening into the valve bore outlet 224 to accommodate to the starting or the first idling operation of the engine. When the bypass valve 225 occupies a low opening degree position, the notched groove 226 in the bypass valve 225 faces the valve bore outlet 224 and hence, the amount of air flowing through the bypass 215 can be controlled finely to a relatively small value by the area of the notched groove 226 opening into the valve bore outlet 224 to accommodate to the usual idling operation of the engine or the application of an engine brake.

When the throttle valve 205 is gradually opened, an amount of air corresponding to the opening degree of the throttle valve 205 is supplied through the intake passage 202 to the engine, whereby the engine is brought into an outputting-operation range.

In such intake-air amount control system, the control block assembly 243 is constructed by mounting the bypass valve 225, the step motor 228, the pickup coil 208b, the boost vacuum sensor 223 and the intake-air temperature sensor 234 to the control block 211 detachably mounted in the housing 210 integral with the throttle body 201 and hence, labor of working or processing for the throttle body 201 is reduced, and the control block assembly 243 can be fabricated in parallel to the throttle body 201, leading to an enhancement in productivity. Moreover, the maintenance of the bypass 215, the bypass valve 225, the throttle sensor 208 and the like can be carried out easily by removing the control block 211 from the throttle body 201. Moreover, it is possible to easily provide an intake-air amount control system for an engine having a different specification, while using the same throttle body 201, by changing the specifications of the bypass valve 225, the step motor 228 and the sensors 208, 233 and 234 in the control block 211, leading to an enhancement in mass productivity of the throttle body 201. In addition, the intake-air amount control system has general-purpose properties, as described above and hence, the degree of freedom of the layout thereof can be increased, and further, the mass productivity can be enhanced to bring about a reduction in cost.

The bypass upstream groove 216, the bypass downstream groove 217, the valve bore inlet 223 and the valve bore outlet 224 constituting principal portions of the bypass 215 can be formed at a stroke in the joint surface 211f of the control block 211 by stamping and hence, the fabrication is extremely easy. Moreover, the valve bore 222 permitting the communication between the valve bore inlet 223 and the valve bore outlet 224 is disposed in parallel to the joint surface 211f of the control block 211 and hence, the bypass upstream groove 216 as well as the bypass downstream groove 217 and the valve bore 222 can be formed in the relatively thin control block in such a manner that they are disposed in proximity to each other. Therefore, the overhanging of the control block 211 from the throttle body 201 can be reduced, leading to the compactness of the entire intake-air amount control system.

In addition, in a state in which the throttle body 201 has been mounted to the engine 5 of the two-wheeled motor vehicle, the bypass valve 225 and the step motor 228 connected to each other through the screw mechanism 227 have only the small gradient θ near the horizontal plane. Therefore, even if a vertical vibration is applied with traveling of the vehicle, the vertical vibration cannot be applied violently to the connection between the bypass valve 225 and the step motor 228, i.e., the screw mechanism 227 , and the wearing of the mechanism 227 due to the vibration can be avoided to stabilize the metering performance of the bypass valve 225.

Moreover, the gradient θ provided to the bypass valve 225 and the step motor 228 is such that the step motor 228 is located at a higher level; and hence, even if fluid foreign matters such as an oil, moisture and the like in a blow-by gas or an EGR gas enter into the valve bore 222 in the bypass 215 through the intake passage 202, the foreign matters cannot rise toward the step motor 228. Therefore, the reliability for the operation of the step motor 228 can be enhanced.

## Claims

1. An intake-air amount control system for an engine, in which a bypass (30, 215) is connected to an intake passage (17a, 202) defined in a throttle body (17, 201) and provided with a throttle valve (21, 205), and extends around said throttle valve (21, 205), and an actuator (39, 228) is connected to a bypass valve (35, 225) for opening and closing said bypass (30, 215) to open and close said bypass valve (35, 225),
**characterized in that** a joint surface (28f, 211f) of a control block (28, 211) is coupled to a mounting surface (27f, 210f) formed on said throttle body (17, 201) in parallel to an axis of said intake passage (17a, 202); said bypass (30, 215) is comprised of a bypass inlet (31i, 220) made in said throttle body (17, 201) and permitting the communication between a portion of said intake passage (17a, 202) upstream from said throttle valve (21, 205) and said mounting surface (27f, 210f), a bypass outlet (31o, 221) made in said throttle body (17, 201) and permitting the communication between a portion of said intake passage (17a, 202) downstream from said throttle valve (21, 205) and said mounting surface (27f, 210f), a bypass upstream groove (32i, 216) defined in at least one of said mounting surface (27f, 210f) and said joint surface (28f, 211f) and leading to said bypass inlet (31i, 220), a bypass downstream groove (32o, 217) defined in at least one of said mounting surface (27f, 210f) and said joint surface (28f, 211f) and leading to said bypass outlet (31o, 221), a valve bore inlet (33i, 223) provided in said control block (28, 211) so as to be connected to a downstream end of the bypass upstream groove (32i, 216), a valve bore outlet (33o, 224) provided in said control block (28, 211) so as to be connected to an upstream end of said bypass downstream groove (32o, 217), and a valve bore (34, 222) provided in said control block (28, 211) to permit the communication between said valve bore inlet (33i, 223) and said valve bore outlet (33o, 224); and said bypass valve (35, 225) for putting said valve bore inlet (33i, 223) and said valve bore outlet (33o, 224) into and out of communication with each other within said valve bore (34, 222) and said actuator (39, 228) for opening and closing said bypass valve (35, 225) are disposed in said control block (28, 211) in parallel to said intake passage (17a, 202).

2. An intake-air amount control system for an engine according to claim 1, wherein
said intake passage (17a) in said throttle body (17) is disposed substantially horizontally; the cylindrical valve bore (34) disposed substantially in parallel to said intake passage (17a) and both of said valve bore inlet (33i) and said valve bore outlet (33o) opening into a lower surface of said valve bore (34) and leading respectively to downstream and upstream portions of said bypass (30) are provided in an intermediate portion of said bypass (30); and said bypass valve (35) of a piston type for putting said valve bore inlet (33i) and said valve bore outlet (33o) into and out of communication with each other is slidably received in said valve bore (34), so that opposite end faces of said bypass valve (35) are in communication with each other.

3. An intake-air amount control system for an engine according to claim 1 or 2, wherein
said valve bore inlet (33i, 223) normally opens into said valve bore (34, 222), and said valve bore outlet (33o, 224) is opened and closed by said bypass valve (35, 225).

4. An intake-air amount control system for an engine according to any of claims 1 to 3, wherein
said bypass valve (35) and said actuator (39) arranged coaxially with each other above a substantially horizontally disposed valve shaft (22) of said throttle valve (21) are disposed in such a manner that the former (35) is turned toward an upstream portion of said intake passage (17a) and the latter (39) is turned toward a downstream portion of said intake passage (17a), and the length of a portion of said bypass (30) from a downstream end thereof to said valve bore outlet (33o) is set at a value larger than that of a portion of said bypass (30) from an upstream end thereof to said valve bore inlet (33i).

5. An intake-air amount control system for an engine according to any of claims 1 to 4, wherein
said throttle body (17, 201) is mounted, with an upstream end of said intake passage (17a, 202) turned rearwards, to an engine (5) provided, with a cylinder block thereof inclined forwards, in a power unit (4) vertically swingably supported on a body frame (11) of a two-wheeled motor vehicle (1) to support a rear wheel (16) at a rear end thereof.

## Patentansprüche

1. Einlassluftmengensteuersystem für einen Motor, worin ein Bypass (30, 215) mit einem Einlasskanal (17a, 202) verbunden ist, der in einem Drosselkörper (17, 201) definiert und mit einem Drosselventil (21, 205) versehen ist, und sich um das Drosselventil (21, 205) herum erstreckt, und ein Aktuator (39, 228) mit einem Bypassventil (35, 225) zum Öffnen und Schließen des Bypasses (30, 215) verbunden ist, um das Bypassventil (35, 225) zu öffnen und zu schließen,
**dadurch gekennzeichnet, dass** eine Verbindungsfläche (28f, 211f) eines Steuerblocks (28, 211) mit einer Befestigungsfläche (27f, 210f) gekoppelt ist, die an dem Drosselkörper (17, 201) parallel zu einer Achse des Einlasskanals (17a, 202) ausgebildet ist; wobei der Bypass (30, 215) aufgebaut ist aus einem Bypasseinlass (31 i, 220), der in dem Drosselkörper (17, 201) hergestellt ist und die Verbindung zwischen einem Abschnitt des Einlasskanals (17a, 202) stromauf von dem Drosselventil (21, 205) und der Befestigungsfläche (27f, 210f) gestattet, einem Bypassauslass (31o, 221), der in dem Drosselkörper (17, 201) hergestellt ist und die Verbindung zwischen einem Abschnitt des Einlasskanals (17a, 202) stromab von dem Drosselventil (21, 205) und der Befestigungsfläche (27f, 210f) gestattet, einer stromaufwärtigen Bypassnut (32i, 216), die in zumindest einer der Befestigungsfläche (17f, 210f) und der Verbindungsfläche (28f, 211f) definiert ist und zu dem Bypasseinlass (31 i, 220i) führt, einer stromabwärtigen Bypassnut (32o, 217), die in zumindest einer der Befestigungsfläche (27f, 210f) und der Verbindungsfläche (28f, 211f) definiert ist und zu dem Bypassauslass (31o, 221) führt, einem Ventilbohrungseinlass (33i, 223), der in dem Steuerblock (28, 211) vorgesehen ist, zur Verbindung mit einem stromabwärtigen Ende der stromaufwärtigen Bypassnut (32i, 216), einem Ventilbohrungsauslass (33o, 224), der in dem Steuerblock (28, 211) vorgesehen ist, zur Verbindung mit einem stromaufwärtigen Ende der stromabwärtigen Bypassnut (32o, 217), und einer Ventilbohrung (34, 222), die in dem Steuerblock (28, 211) vorgesehen ist, um die Verbindung zwischen dem Ventilbohrungseinlass (33i, 223) und dem Ventilbohrungsauslass (33o, 224) zu gestatten; und wobei das Bypassventil (35, 225), um den Ventilbohrungseinlass (33i, 223) und den Ventilbohrungsauslass (330, 224) innerhalb der Ventilbohrung (34, 222) in und außer Verbindung miteinander zu setzen, und der Aktuator (39, 228) zum Öffnen und Schließen des Bypassventils (35, 225) in dem Steuerblock (28, 211) parallel zu dem Einlasskanal (17a, 202) angeordnet sind.

2. Einlassluftmengensteuersystem für einen Motor nach Anspruch 1, worin der Einlasskanal (17a) in dem Drosselkörper (17) im Wesentlichen horizontal angeordnet ist; die zylindrische Ventilbohrung (34), die im Wesentlichen parallel zu dem Einlasskanal (17a) angeordnet ist, und sowohl der Ventilbohrungseinlass (33i) als auch der Ventilbohrungsauslass (33o), die sich in eine Unterseite der Ventilbohrung (34) öffnen und jeweils zu stromabwärtigen und stromaufwärtigen Abschnitten des Bypasses (30) führen, in einem Zwischenabschnitt des Bypasses (30) vorgesehen sind; und das Bypassventil (35) vom Kolbentyp, um den Ventilbohrungseinlass (33i) und den Ventilbohrungsauslass (33o) in und außer Verbindung miteinander zu bringen, in der Ventilbohrung (34) verschiebbar aufgenommen ist, sodass gegenüberliegende Endflächen des Bypassventils (35) miteinander in Verbindung stehen.

3. Einlassluftmengensteuersystem für einen Motor nach Anspruch 1 oder 2, worin
sich der Ventilbohrungseinlass (33i, 223) normalerweise in die Ventilbohrung (34, 222) öffnet, und der Ventilbohrungsauslass (33o, 224) durch das Bypassventil (35, 225) geöffnet und geschlossen wird.

4. Einlassluftmengensteuersystem für einen Motor nach einem der Ansprüche 1 bis 3, worin das Bypassventil (35) und der Aktuator (39), die koaxial zueinander oberhalb einer im Wesentlichen horizontal angeordneten Ventilwelle (22) des Drosselventils (21) angeordnet sind, derart angeordnet sind, dass das erstere (25) zu einem stromaufwärtigen Abschnitt des Einlasskanals (17a) weist, und der letztere (39) zu einem stromabwärtigen Abschnitt des Einlasskanals (17a) weist, und die Länge eines Abschnitts des Bypasses (30) von seinem stromabwärtigen Ende zu dem Ventilbohrungsauslass (33o) auf einen größeren Wert gesetzt ist als jene eines Abschnitts des Bypasses (30) von seinem stromaufwärtigen Ende zu dem Ventilbohrungseinlass (33i).

5. Einlassluftmengensteuersystem für einen Motor nach einem der Ansprüche 1 bis 4, worin der Drosselkörper (17, 201), bei nach hinten weisendem stromaufwärtigen Ende des Einlasskanals (17a, 202), an einem Motor (5) angebracht ist, der mit nach vorne geneigtem Zylinderblock in einer Antriebseinheit (4) vorgesehen ist, die an einem Aufbaurahmen (11) eines zweirädrigen Kraftfahrzeugs (11) vertikal schwenkbar gelagert ist, um an ihrem Hinterende ein Hinterrad (16) zu tragen.

## Revendications

1. Système de commande de la quantité d'air admise pour un moteur, dans lequel une dérivation (30, 215) est raccordée à un passage d'admission (17a, 202) défini dans un corps d'étranglement (17, 201) et muni d'une vanne d'étranglement (21, 205), et s'étend autour de ladite vanne d'étranglement (21, 205), et un actionneur (39, 228) est relié à une vanne de dérivation (35, 225) dédiée à l'ouverture et à la fermeture de ladite dérivation (30, 215), en vue d'ouvrir et de fermer ladite vanne de dérivation (35, 225),
**caractérisé par le fait qu'**une surface (28f, 211f) de rattachement d'un bloc de commande (28, 211) est couplée à une surface de montage (27f, 210f) façonnée sur ledit corps d'étranglement (17, 201), parallèlement à un axe dudit passage d'admission (17a, 202) ; ladite dérivation (30, 215) comprend une admission de dérivation (31i, 220), ménagée dans ledit corps d'étranglement (17, 201) et autorisant la communication entre ladite surface de montage (27f, 210f) et un tronçon dudit passage d'admission (17a, 202) situé en amont de ladite vanne d'étranglement (21, 205), une sortie de dérivation (31o, 221), ménagée dans ledit corps d'étranglement (17, 201) et autorisant la communication entre ladite surface de montage (27f, 210f) et un tronçon dudit passage d'admission (17a, 202) situé en aval de ladite vanne d'étranglement (21, 205), une rainure (32i, 216) de dérivation en amont qui est pratiquée dans au moins l'une, parmi lesdites surface de montage (27f, 210f) et surface de rattachement (28f, 211f), et mène à ladite admission de dérivation (31i, 220), une rainure (32o, 217) de dérivation en aval qui est pratiquée dans au moins l'une, parmi lesdites surface de montage (27f, 210f) et surface de rattachement (28f, 211f), et mène à ladite sortie de dérivation (31o, 221), un alésage (33i, 223) de distribution à l'admission, façonné dans ledit bloc de commande (28, 211) de manière à être raccordé à une extrémité aval de la rainure (32i, 216) de dérivation en amont, un alésage (33o, 224) de distribution à la sortie, façonné dans ledit bloc de commande (28, 211) de manière à être raccordé à une extrémité amont de ladite rainure (32o, 217) de dérivation en aval, et un alésage de distribution (34, 222) façonné dans ledit bloc de commande (28, 211) pour permettre la communication entre ledit alésage (33i, 223) de distribution à l'admission et ledit alésage (33o, 224) de distribution à la sortie ; et ladite vanne de dérivation (35, 225) pour établir et interrompre la communication mutuelle dudit alésage (33i, 223) de distribution à l'admission et dudit alésage (33o, 224) de distribution à la sortie à l'intérieur dudit alésage de distribution (34, 222), et ledit actionneur (39, 228) pour l'ouverture et la fermeture de ladite vanne de dérivation (35, 225), sont disposés dans ledit bloc de commande (28, 211) parallèlement audit passage d'admission (17a, 202).

2. Système de commande de la quantité d'air admise pour un moteur, selon la revendication 1, dans lequel
ledit passage d'admission (17a) est placé sensiblement horizontalement dans ledit corps d'étranglement (17), l'alésage cylindrique de distribution (34) est disposé sensiblement parallèle audit passage d'admission (17a), et ledit alésage (33i) de distribution à l'admission et ledit alésage (33o) de distribution à la sortie, débouchant dans une surface inférieure dudit alésage de distribution (34) et menant, respectivement, à des zones situées en aval et en amont de ladite dérivation (30), sont prévus une zone intermédiaire de ladite dérivation (30) ; et ladite vanne de dérivation (35) du type piston, pour établir et interrompre la communication mutuelle dudit alésage (33i) de distribution à l'admission et dudit alésage (33o) de distribution à la sortie, est logée à coulissement dans ledit alésage de distribution (34), de telle sorte que des faces extrêmes opposées de ladite vanne de dérivation (35) soient mutuellement en communication.

3. Système de commande de la quantité d'air admise pour un moteur, selon la revendication 1 ou 2, dans lequel
ledit alésage (33i, 223) de distribution à l'admission débouche normalement dans ledit alésage de distribution (34, 222), et ledit alésage (33o, 224) de distribution à la sortie est ouvert et fermé par ladite vanne de dérivation (35, 225).

4. Système de commande de la quantité d'air admise pour un moteur, selon l'une quelconque des revendications 1 à 3, dans lequel
ladite vanne de dérivation (35) et ledit actionneur (39), agencés coaxialement l'un à l'autre au-dessus d'un arbre (22) de ladite vanne d'étranglement (21) sensiblement placé dans le sens horizontal, sont disposés de façon telle que ladite vanne (35) pointe vers un tronçon dudit passage d'admission (17a) qui est situé en amont, et que ledit actionneur (39) pointe vers un tronçon dudit passage d'admission (17a) qui est situé en aval ; et la longueur d'une zone de ladite dérivation (30), depuis une extrémité aval de cette dernière jusqu'audit alésage (33o) de distribution à la sortie, est réglée sur une valeur supérieure à celle d'une zone de ladite dérivation (30) partant d'une extrémité amont de cette dernière et gagnant ledit alésage (33i) de distribution à l'admission.

5. Système de commande de la quantité d'air admise pour un moteur, selon l'une quelconque des revendications 1 à 4, dans lequel
ledit corps d'étranglement (17, 201) est monté, avec une extrémité amont dudit passage d'admission (17a, 20) orientée vers l'arrière, sur un moteur (5) dont un bloc-cylindres est incliné vers l'avant et qui est prévu dans une unité motrice (4) en appui, à oscillations verticales, sur un châssis (11) d'un véhicule motorisé (1) à deux roues, afin de supporter une roue arrière (16) à une extrémité postérieure de ce dernier.
